# EUROPÄISCHE PATENTSCHRIFT

(11) **EP 1 570 983 B1**
(45) Veröffentlichungstag und Bekanntmachung des Hinweises auf die Patenterteilung: **17.10.2007**
(21) Anmeldenummer: 04002353.3
(22) Anmeldetag: 03.02.2004
(51) Int. Cl.: B32B 7/10, B32B 7/04

(54) **Werkstoffverbunde aus einem Formteil aus transparenten oder transluzenten, einfärbbaren Kunststoffformmassen**
Material composites made of a moulded part made of transparent or translucent, dyeable plastic thermoplastic moulding compositions
Composites de matériaux en pièce moulée en compositions plastiques de moulage thermoplastiques transparentes ou translucides pouvant être colorées

(43) Veröffentlichungstag der Anmeldung: 07.09.2005
(73) Patentinhaber: EMS-Chemie AG, 7013 Domat/Ems (CH)
(72) Erfinder: Buehler, Friedrich Severin, Dr.rer.nat. Dipl.-Chem, 7430 Thusis (CH)
(74) Vertreter: Becker Kurig Straus

(56) Entgegenhaltungen:
- EP-A- 1 092 747
- WO-A-01/36524
- WO-A-02/090421
- PATENT ABSTRACTS OF JAPAN Bd. 0071, Nr. 12 (M-215), 17. Mai 1983 (1983-05-17) & JP 58 033429 A (DAINIPPON INSATSU KK), 26. Februar 1983 (1983-02-26)

## Beschreibung

Die vorliegende Erfindung betrifft den in den Patentansprüchen angegeben Gegenstand. Die Erfindung betrifft daher Werkstoffverbunde aus einem Formteil aus mindestens einer transparenten oder transluzenten, einfärbbaren Polyamidformmasse, das mit wenigstens einer transparenten oder transluzenten Oberflächenschicht und/oder mit Dekorfolien, Funktionsfolien oder Lacken oder Kautschuken oder anderen Kunststoffen verbunden ist. Die verwendeten Polyamidformmassen weisen Qualitäten auf, die bislang nur mit PMMA-, Polycarbonat (PC) oder härtbaren Gussmaterialien erreicht werden konnten. Die für die erfindungsgemäßen Werkstoffe verwendeten Formmassen sind Polyamidformmassen. Sie enthalten Gleitmittel, die die Haftung zu anderen Komponenten nicht stören. Die erfindungsgemäßen Werkstoffverbunde können für optische Bauteile wie ophthalmische Linsen oder Sonnenlinsen für Brillen, Lupen, Linsensysteme, Mikroskope, Kameras, Displays für Handys, Kameralinsen, Messinstrumente, Uhrengläser oder Uhrengehäuse, Gehäuse für tragbare Telefone mit oder ohne integrierten Displays oder Apparate jeder Art und für CD's, DVD's, Linsen für LED's, Lichtwellenleiter, Lichtkoppler, -Verstärker, Verteiler und Scheiben für Lampen und Lasergeräte, Verbundfolien, Verbundbehälter, und transparente Verbunde aller Art eingesetzt werden.

Kunststoffe haben aufgrund ihrer spezifischen Eigenschaften, wie geringes Gewicht, gute chemische Beständigkeit, hohe mechanische Stabilität, eine zunehmende Bedeutung als Werkstoff, insbesondere auch in Werkstoffverbunden. Die hervorragende Verarbeitbarkeit thermoplastischer Kunststoffe durch Spritzguss, Gießen, Blasformen, Extrusion etc. ermöglicht zudem die Herstellung von Kunststoffgegenständen und -formteilen mit beliebiger Geometrie, wobei auch komplizierte Werkstücke beziehungsweise Werkstoffverbunde einfach und mit hoher Präzision herstellbar sind.

Für transparente oder transluzente thermoplastische Kunststoffe eröffnet sich eine Reihe von Anwendungsbereichen, beispielsweise Kfz-Seitenscheiben, Kfz-Scheinwerfer-Streuscheiben, Kfz-Sonnendächer, Flugzeug- und Caravanscheiben, Gebäudeverglasungen, Terrassen- und Gewächshausüberdachungen, Lichtwerbungsabdeckungen, Sicherheitsverglasungen, Gebrauchsgegenstände mit besonderer dekorativer Wirkung, Linsen für Korrektur- und Sonnenbrillen, Visiere, transparente Bauteile für optische Geräte und Projektionssysteme, Kontrastscheiben für Monitore und Fernsehbildschirme, optische Fasern oder Solarzellen. Die Substitution von Glas und anderen Werkstoffen scheitert jedoch in vielen Fällen an den intrinsischen Nachteilen von Kunststoffen.

Transparente Polyamidformmassen, insbesondere transparente Polyamidformmassen, erreichen aber inzwischen zunehmend Anwendungen, die bisher hochreinen Glas, PMMA-, PC- oder härtbaren Gussmaterialien vorbehalten waren. Die Formmassen dürfen keinerlei mit dem Auge sichtbare Partikel oder Kontaminationen enthalten und in allen Verarbeitungsschritten auch keine erzeugen, so dass die daraus hergestellten Formteile einwandfreie Reinheit, Einfärbbarkeit in Masse oder im Tauchbad besitzen. Im Bereich von beispielsweise optischen Linsen, die mit Hartlacken kratzfest ausgerüstet werden müssen, bestehen im Bereich der Haftung besondere Anforderungen. In zahlreichen Anwendungen müssen die Formteilgrundkörper durch inmold labeling, inmold decoration, Folienhinterspritzen, Verbundspritzgiessen, Kaschieren, Bedampfen, Bedrucken, Kleben, Färben oder Lackieren, Verschweissen zu Verbundwerkstoffen veredelt werden und dauerhaft mit anderen Komponenten verbunden werden. Hier verhalten sich insbesondere siliconhaltige oder flüssige Additive besonders nachteilig.

Werkstoffverbunde enthalten beispielsweise Komponenten aus transparenten Kunststoffen, die mit Dekorfolien, Funktionsfolien wie beispielsweise Polarisationsfolien, Hartlackfolien, Filterfolien, oder Lacken, oder Kautschuken, oder anderen Kunststoffen verbunden oder verklebt werden.

Bevorzugte Anwendungen sind optische Bauteile wie ophthalmische Linsen oder Sonnenlinsen für Brillen, Lupen, Linsensysteme, Mikroskope, Kameras, Displays für tragbare Telefone, Kameralinsen, Messinstrumente, Uhrengläser beziehungsweise Uhrengehäuse, Gehäuse für tragbare Telefone mit oder ohne integrierten Displays oder Apparate jeder Art. Auch CD's, DVD's, Linsen für LED's, Lichtwellenleiter, Lichtkoppler, -Verstärker, Verteiler und Scheiben für Lampen und Lasergeräte, Verbundfolien, Verbundbehälter, und transparente Verbunde aller Art fordern diese Qualität und werden in den meisten Fällen mit Komponenten veredelt, die sehr gut haften müssen.

Neben der einwandfreien Qualität des Formteils werden hohe Anforderungen an Doppelbrechung, Spannungsfreiheit, Lackhaftung, Verbundhaftung, Chemikalienresistenz, Zähigkeit, Wechselbiegefestigkeit, Berstfestigkeit, Temperaturbeständigkeit, Witterungsbeständigkeit gestellt.

Diese Eigenschaften werden beispielsweise benötigt bei Filtertassen im Trinkwasser-Drucksystem, bei Wasserzählern, in Flaschen, Hohlkörpern, Druckgefässen, Durchflussmessern, Brillen, Maschinenteilen, Füllstandsanzeigen, Apparatefenstern und schusssicheren oder drucksicheren Verglasungen.

Ideale Materialien, die die grösste Zahl dieser Eigenschaften in einem Produkt enthalten, sind transparente Polyamide.

Formteile, hergestellt aus transparenten Polyamiden, konnten in den letzten Jahren bezüglich Farbe und Transparenz auf die Qualität von Formteilen hergestellt aus PMMA oder PC Formmassen gebracht werden. Hochreine PMMA- oder PC-Formteile, die für Linsen, optische Datenträger oder Lichtwellenleiter eingesetzt werden, konnten bislang mit transparenten Polyamiden nur mit höheren Ausschussraten hergestellt werden, da die Reinheit und Einschlussfreiheit stark vom Verarbeitungsverfahren abhängt. Die Wahl der Additive war wesentlich durch die später herzustellenden Verbunde eingeschränkt.

Die Reinheit von transparenten Formteilen wird zusätzlich negativ beeinflusst, wenn beispielsweise Linsen hergestellt werden sollen, die Additive für den UV-Schutz und Farbpigmente oder andere Additive und Zuschlagstoffe enthalten.

Ablagerungen auf Schnecken und Zylinderwänden der Spritzgussmaschine oder in Formen mit ungenügenden Entlüftungen wirken sich negativ auf die Reinheit und Qualität der Formteile aus und verlangen erhöhten Reinigungsaufwand.

Es war daher ein schon lange bestehendes Bedürfnis, transparente Polyamidformmassen zu entwickeln, die es erlauben, Formteile mit einwandfreier Reinheit und Qualität herzustellen, wobei die Werkzeugkontur exakt abgebildet wird, unter Beibehaltung der genannten vorteilhaften Eigenschaften, insbesondere der ausgezeichneten Haftung zu den Veredelungskomponenten oder Oberflächenschichten zur Herstellung von stabilen Werkstoffverbunden. Gleichzeitig sollen die rheologischen Eigenschaften der Schmelze während der Formgebung so verbessert werden, dass hohe Fliesslängen bei geringen Einspritzdrücken möglich werden.

Wesentliche Voraussetzungen für die obigen Anforderungen sind das Vermeiden von Belägen auf Schnecken, Zylindern, Düsen und in den Formwerkzeugen, um Reinigungsintervalle während der Produktion wirtschaftlich zu verlängern und Ausschussraten niedrig zu halten.

Die Verarbeitungsprozesse erfordern ausgezeichnete konstante Fliessfähigkeit, sehr geringe Dosierzeitschwankungen und ausgezeichnetes Aufschmelzverhalten im Zylinder der Schmelzeinrichtung.

Die Verbesserung der Fliessfähigkeiten erfolgt im allgemeinen durch das Einstellen niedrigerer Viskostitäten im Polymer. Nachteil ist der Verlust an mechanischen Eigenschaften wie Zähigkeit, Berstfestigkeit oder Wechselbiegefestigkeit. Gleichzeitig wird auch die Chemikalienresistenz wie Spannungsriss Beständigkeit in beispielsweise Alkoholen oder Aceton reduziert, wie beispielsweise bei PC-Formmassen zur Herstellung von CD's.

Ähnliche Effekte werden erzielt, wenn der Glaspunkt des amorphen Polymers auf tiefere Temperaturen wie beispielsweise in PMMA mit 90-100 °C eingestellt wird. Hier entsteht der Nachteil der geringen Wärmeformbeständigkeit, die beispielsweise das Härten von Schutzlacken (Hardcoat für Linsen), welches üblicherweise bei 100 bis 130 °C stattfindet, nicht erlaubt.

Eine weitere Variante besteht in der Verwendung von Gleitmitteln wie beispielsweise Fettsäuren oder Metallseifen wie Stearinsäure oder Palmitinsäure, Ölsäure, Montansäuren oder deren Kalzium-, Magnesium- oder Zinksalze DE 100 46 772 A1, die beispielsweise das Verarbeitungsverhalten und die Kerbschlagzähigkeit von ABS verbessern. Auf den negativen Einfluss von Silikonölen wird in EP-A-0006521 hingewiesen. Diese Gleitmittel können das Verarbeitungsverhalten, die Verteilung von Additiven und die Fliessfähigkeit von transparenten Polyamiden zwar wesentlich verbessern, vermeiden aber nicht wirksam genug die Belagsbildung auf den Schnecken oder in der Spritzgussform und beeinflussen insbesondere die Lackhaftung oder die Haftung bei Verbundspritzgussteilen negativ.

DE 199 26 622 A1 beschreibt die Verwendung von Paraffinöl in Kombination mit anderen Gleitmitteln in ABS/Kautschuk-Werkstoffen mit Vorteilen in Bezug auf Fliessverhalten und Kerbschlagzähigkeit. Bezüglich reduzierter Belagsbildung und verbesserter Reinheit transparenter Formteile werden keine Angaben gemacht.

Paraffinöl wird häufig zur Zubereitung von rotem Phosphor zur Herstellung von beispielsweise flammgeschützten Polyamidformmassen verwendet (WO 98/27153, EP-A-1024167) oder als Weichmacher in Elastomerformmassen (DE-A-196 45 727). Diese Produkte weisen allerdings keinerlei Transparenz auf.

In JP-A-50109247 werden Polycarbonat/AES (Acrylnitril/EP-Kautschuk/Styrol)-Blends beschrieben, die zur Verbesserung der Tieftemperatur Zähigkeit 0,1 bis 10 Gew.-% Paraffinöl enthalten. Angaben zum Einfluss auf die Reinheit eines transparenten Formteils und auf die Belagsbildung sind nicht vorhanden.

EP 1 092 747 B1 beschreibt eine Werkstoffe trennende und schmierende Additivzusammensetzungen, deren Verwendung und eine Zusammensetzung welche organisches Polymer enthält, auf der Basis von gesättigten Kohlenwasserstoffen aus der Gruppe der Hexamethyltetracosane und dessen Isomere in Kombination mit wenigstens einem Polysiloxanpolymer mit einem Molekulargewicht grösser 500.000 g/mol. Mit dieser Additivzusammensetzung aus Hexamethyltetracosan und Polysiloxanpolymer können Copolyester wie PET, PBT, PEN und ihre Copolymere, Polyester, Polycarbonate, Polyurethane, Polyacetale, Polyamide, Copolyamide, Polyphenylenoxide, Polyimide, Polyamidimide, Polysulfone, Polyketone, Polyamidzusammensetzungen hoher Festigkeit, transparentes ABS, Styrolharze, Methacrylate und Polyetherimide zu Formteilen verarbeitet werden ohne das Ablagerungen auf der Schnecke oder in der Form entstehen. In den Beispielen der EP 1 092 747 B 1 wird als Additivzusammensetzung 0,1 Gew.-% Hexamethylentetracosan zusammen mit 0,1 Gew.-% Polysiloxanpolymer bei der Extrusion von HDPE verwendet. In den anderen Beispielen werden PMMA-Copolymere, PET sowie Styrolcopolymere zusammen mit dem beschriebenen Additiv verarbeitet.

Ob diese Vorteile gemäß EP 1 092 747 B1 ausreichen, um sehr anspruchsvolle, transparente Formteile aus definierten transparenten Polyamidformmassen herzustellen, die für die Anwendungen im Bereich der Linsen, CD's, DVD's, Displays von tragbaren Telefonen, Kameralinsen oder Lichtwellenleiter geeignet sind, ist nicht näher in der EP 1 092 747 B1 beschrieben beziehungsweise kann nicht aus den dort gearbeiteten Beispielen entnommen werden. Ferner kann aus der EP 1 092 747 B1 keinerlei Anregung entnommen werden beziehungsweise es ist keine Einschätzung möglich, ob nicht doch optisch störende Partikelgrössen über 35 µm im Formteil verbleiben. Weiterhin sind keine Angaben zu den Reinigungszyklen, beispielsweise einer Linsenfertigung angegeben. Für die wichtige Haftung zu anderen Stoffen in veredelten Formteilen oder Folien erwartet der Fachmann aus der EP 1 092 747 B1 für die mobilen, schmierenden, ablösenden und verflüssigenden Additive eher Nachteile.

Es ist daher Aufgabe der vorliegenden Erfindung Werkstoffverbunde aus einem Formteil aus transparenten oder transluzenten Polyamidformmassen, mit transparenten Oberflächenschichten etc. bereitzustellen, welche eine einwandfreie Reinheit und Qualität aufweisen, die bislang nur mit hochreinem PMMA oder Polycarbonatmaterialien möglich war und wobei die Werkzeugkontur exakt abgebildet wird, unter Beibehaltung der genannten vorteilhaften Eigenschaften, insbesondere der ausgezeichneten Haftung zu den Veredelungskomponenten oder Oberflächenschichten zur Herstellung von stabilen Werkzeugverbunden. Gleichzeitig sollen die reologischen Eigenschaften der Schmelze während der Formgebung so verbessert werden, dass hohe Fließlängen bei geringen Einspritzdrücken möglich werden.

Die obige Aufgabe wird durch die Werkstoffverbunde gemäß Anspruch 1 beziehungsweise durch die Werkstoffverbunde gemäß den Unteransprüchen 2 bis 13 gelöst. In den Ansprüchen 14, 17, 21 und 25 sind bevorzugte Polyamid-Materialien für die Verwendung in den Polyamidformmassen zur Herstellung der erfindungsgemäßen Formteile beziehungsweise Werkstoffverbunde angegeben.

In den weiteren Unteransprüchen sind vorteilhafte Ausführungsformen der Erfindung enthalten.

Die obige Aufgabe wird überraschenderweise durch die Verwendung von Gleitmitteln aus der Gruppe aus Sorbitanestern, Sebazinsäurestern, Dodekandisäureestern, Behensäurestern, Glycerin, Glykol, Diethylenglykol, Stearoylamid, Stearylstearat, Ethylenbissteroylamid, n-Octyl-Pyrrolidon und besonders bevorzugt durch Gleitmittel aus der Gruppe der unpolaren Paraffinöle gelöst, die die Haftung beispielsweise zu Hartlacken auf optischen Linsen nicht negativ beeinflussen.

Ein besonders geeignetes, glasklares, farbloses Paraffinöl (HTNP) enthält nach GC-Analyse die Hauptkomponenten 2,6,10,15,19,23-Hexamethyltetracosan mit verschiedenen niedermolekularen Paraffinen. Der Si-Gehalt liegt unter 100 ppm. Diese Paraffinölzusammensetzung ist eine glasklare Flüssigkeit mit Schmelzpunkt bei -40 °C, der Dichte 0,810 bis 0,830 g/ml und vollständiger Unlöslichkeit in Wasser. Entsprechende Produkte sind am Markt erhältlich, die im Bereich -40 °C bis 240 °C (10 mm Hg) flüssig sind.

Diese Gleitmittel entfalten erfindungsgemäß eine positive Wirkung während der Extrusions- oder Spritzgiessverarbeitung, wenn sie mit oder ohne Pigmente auf das Granulat aufgerollt, als reines Additiv oder in der Form eines Masterbatches mit dem Basispolymer compoundiert und oder schmelzefiltriert oder bereits bei der Polymerisation oder Polykondensation dem Basispolymer zugesetzt werden.

Die Formmassen zur Herstellung der transparenten Oberflächenschicht und/oder der anderen Kunststoffe des erfindungsgemäßen Werkstoffverbundes können ausgewählt sein aus der Gruppe der Kunststoffe aus Polymethylmethacrylat, Polycarbonat, Diethylen-Glykol-Diallyl-Carbonat (CR 39), Polystryrol, Polyethylenerephthalat, Polybutylenterephthalat, PEN, und deren Copolymere, Polyamid, Copolyamid, Polyethersulfon, Poly(aryl)etherketon, Polyimid, Polyurethan, Polyacetal, Polyamidimid, Polyetherketon, Polyetherimide, Polyphenylenoxid, Polyoxymethylen, Acrylnitril/Butadien/Styrol-Polymer.

Die Formteile des erfindungsgemäßen Werkstoffverbundes sind nach dem Spritzgießverfahren oder Spritzprägeverfahren, Spritzblasverfahren, Spritz-Streck-Blasverfahren oder Extrusionsverfahren oder einem Spritzguss-Sonderverfahren herstellbar.

Die erfindungsgemäßen Werkstoffverbunde sind insbesondere durch inmold labeling, inmold decoration, Folienhinterspritzen, Verbundspritzgiessen, Kaschieren, Bedampfen, Bedrucken, Kleben, Färben oder Lackieren, Verschweissen veredelt und dauerhaft mit anderen Komponenten verbunden.

Sie können lackiert werden und besonders bevorzugt ist, dass sie lackiert werden und besonders bevorzugt dass, Hardcoats oder einfärbbare Hardcoats, die mit oder ohne Primerschicht, aus Lösung auf das Formteil, hergestellt durch thermoplastische Formgebungsverfahren oder durch Formgebungsverfahren für reaktive Gussmassen, wie für Polyurethan-Gussmassen, aufgezogen und ausgehärtet werden.

In einer bevorzugten Ausführungsform werden Bedampfungsmethoden (Sputtering) zum Aufbringen von Schichten auf diese Formteile beziehungsweise. Verbunde angewendet, wobei eine Silizium-Hartschicht oder eine Tönung durch Verdampfen von Metallen mit oder ohne Vorbereitung durch Plasmabehandlung erzeugt wird, angewendet wird.

Die erfindungsgemäßen Werkstoffverbunde werden für optische Bauteile wie ophthalmische Linsen oder Sonnenlinsen für Brillen, Lupen, Linsensysteme, Mikroskope, Kameras, Displays für Handys, Kameralinsen, Messinstrumente, Uhrengläser oder Uhrengehäuse, Gehäuse für tragbare Telefone mit oder ohne integrierten Displays oder Apparate jeder Art und für CD's, DVD's, Linsen für LED's, Lichtwellenleiter, Lichtkoppler, -Verstärker, Verteiler und Scheiben für Lampen und Lasergeräte, Verbundfolien, Verbundbehälter, und transparente Verbunde aller Art eingesetzt.

Die zur Herstellung der erfindungsgemäßen Formteile verwendeten Polyamidformmassen sind in einer bevorzugten Ausführungsform Polyamidformmassen. Die Polyamidformmassen enthalten transparente oder transluzente Polyamide gemäß der weiter unten stehenden Formel (0).

Die Polyamidzusammensetzungen für die Polyamidformmassen können aus einem oder mehreren Komponenten der Polyamide mit der Formel (0) und einem oder mehreren Komponenten aus teilkristallinen Polyamide, Copolyamiden oder Block-Copolyamiden zusammengesetzt sein. Dabei können die Komponenten aus teilkristallinen Polyamiden, Copolyamiden oder Block-Copolyamiden teilweise oder ganz ersetzt sein durch Fremdpolymere oder andere Polymere enthalten, aus der Gruppe aus Schlagzähmodifikatoren wie gepfropfte Kern-Mantel-Polymere, Schlagzähmodifikatoren wie SBR, SBS, EPS, EPR, SEBS, EMP, EPDM, Maleinsäureanhydrid gepfropfte Polyethylene, Propylen, Terpolymere aus Ethylen-Glycidyl-Methacrylat, oder der Gruppe aus thermotropen- oder thermochromen Additiven, die temperaturabhängig oder unabhängig von der Wellenlänge des eingestrahlten Lichtes den Farbton ändern. Die Zusammensetzung können auch weitere Verarbeitungshilfsstoffe oder Verstärkungstoffe wie Glasfasern oder Kugeln oder eine Antibeschlagausrüstung enthalten.

Besonders bevorzugt sind in den erfindungsgemäßen Formmassen isorefraktive gepfropfte Kern-Mantel-Polymere und isorefraktive Verstärkungsstoffe.

Geeignete transparente Polyamide bestehen aus Lactamen, Aminocarbonsäruen und oder Dicarbonsäuren mit entsprechenden Mengen an Diaminen, wobei die Gerüste der einzelnen Monomere aus der Gruppe der Aliphaten, Cycloaliphaten oder Aromaten stammen, die weitere Substituenten oder Verzweigungen aufweisen können.

Ferner können transparente Polyamide aus teilkristallinen Polyamiden und/oder teilkristallinen Copolyamide mit amorphen Polyamiden und/oder amorphen Copolyamiden durch Compoundierung in Extrudern bei Temperaturen zwischen 200 und 350°C in Ein- oder Mehrwellenextrudern als Polymerblends oder Legierungen hergestellt werden.

Die Herstellung der transparenten Polyamide aus geeigneten Monomerkombinationen erfolgt beispielsweise über die bekannten Polykondensationsprozesse in Druckautoklaven bis 40 bar. Modifizierte Verfahren bis maximal 6 bar finden beim Einsatz von aktivierten Diaminen mit aromatischen Kernen Anwendung. Wahlweise kann der Aufbauschritt durch Anlegen von Vakuum zur Entfernung von Reaktionswasser geführt werden. Die Herstellung kann auch in zwei Stufen erfolgen, wobei zunächst Vorkondensate hergestellt werden, die in einen Schmelzenachkondensationsprozess beispielsweise in Extrudern auf die gewünschte Endviskosität gebracht werden.

Die so erhaltenen Polymerschmelzen werden durch bekannte Stranggranulatoren oder Vorrichtungen für Heissabschlag zu Pellets verarbeitet. Vorzugsweise wird die Polymerschmelze durch kontinuierliche oder diskontinuierliche Schmelzefiltrationen mit Sieben von 5 bis 100 um Maschenweite oder Sandfiltern oder Filterkerzen aus keramischen oder metallischen Sintermaterialien vor der Pelletierung gereinigt. Diese Pellets werden in Trocknern bei Temperaturen von 60 bis 180°C mit trockenen Gasen wie Luft oder Stickstoff oder im Vakuum bei 1 bis 1000 mbar auf die gewünschte Feuchte zwischen 0,01 und 0,1 % Wassergehalt eingestellt.

Zusammensetzungen für transparente Polyamide ergeben sich gemäß Formel (0):

-(NH-R1-CO)x-(NH-R2-NH)y-(CO-R3-CO)y- (0)

x, y: 0-100 Mol%
R₁, R₂, R₃: (CH₂)2-18 linear oder verzweigt; Cycloaliphaten; Dialkyl-Cycloaliphaten; alkylierte-Cycloaliphaten; o/m/p-Aromaten; o/m/p-Dialkyl-Aromaten oder Mischungen daraus. Die Aromaten oder Cycloaliphaten können ein- oder mehrkernig, direkt oder über lineare oder verzweigte Alkylgruppen verbunden sein.

Zusammensetzungen für transparente Polyamidblends ergeben sich aus ein oder mehreren Komponenten der Formel (0) und ein oder mehreren Komponenten aus teilkristallinen Polyamiden, Copolyamiden oder Blockcopolyamiden oder anderen teilkristallinen Kunststoffen wie Kern-Mantel-Polymeren.

Bevorzugte Zusammensetzungen für transparente Polyamide, ohne Aromaten, sind Formmassen, bestehend aus 100 Mol% einer Diaminmischung mit 0-100 Mol% PACM [Bis-(4-aminocyclohexyl)-methan] und 0-100 Mol% MACM [Bis-(4-amino-3-methyl-cyclohexyl)-methan], wobei 0-10 Mol% durch andere Diamine wie beispielsweise aliphatische mit 6 bis 12 C-Atomen, cycloaliphatische, alkyl-substituierte cycloaliphatische, verzweigte aliphatische Diamine oder Multiamine mit 3 bis 12 Aminogruppen oder deren Mischungen, ersetzt sein können und aus 100 Mol% langkettigen aliphatischen Dicarbonsäuren oder Mischungen dieser Dicarbonsäuren mit 8 bis 14 C-Atomen, wobei Cyclohexyldicarbonsäure oder deren Mischungen, ersetzt sein können (vgl. Anspruch 17).

Die 0-10 Mol% der anderen Diamine und 0-10 Mol% der anderen Dicarbonsäuren können wahlweise als 0-20 Mol% Aminosäuren oder Lactamen zugegeben werden.

Bevorzugt sind transparente Formassen, hergestellt aus 100 Mol% einer Diaminmischung mit 30-70 Mol% Bis-(4-amino-cyclohexyl)-methan mit weniger als 50 Gew.% trans,trans Isomeren und 70-30 Mol% Bis-(4-amino-3-methyl-cyclohexyl)-methan und aus 100 Mol% Dodecandisäure (DDS) oder Sebazinsäure (SS) oder Azelainsäure (AS) oder deren Mischungen.

Besonders bevorzugt sind transparente Formassen, hergestellt aus 100 Mol% einer Diaminmischung mit 40-70 Mol% Bis-(4-amino-cyclohexyl)-methan mit weniger als 50 Gew.% trans,trans Isomeren und 60-30 Mol% Bis-(4-amino-3-methyl-cyclohexyl)-methan und aus 100 Mol% Dodecandisäure.

Besonders bevorzugt sind transparente Formassen, hergestellt aus 100 Mol% einer Diaminmischung mit 50-70 Mol% Bis-(4-amino-cyclohexyl)-methan mit weniger als 50 Gew.% trans,trans Isomeren und 50-30 Mol% Bis-(4-amino-3-methyl-cyclohexyl)-methan und aus 100 Mol% Dodecandisäure.

Besonders bevorzugt sind transparente Formassen, hergestellt aus 100 Mol% einer Diaminmischung mit 50-70 Mol% Bis-(4-amino-cyclohexyl)-methan mit weniger als 50 Gew.% trans,trans Isomeren des Typs Dicykan mit Handelsnamen 4,4'-Diaminodicyclohexylmethan (CAS-Nr. 1761-71-3 der Fa. BASF) und 50-30 Mol% Bis-(4-amino-3-methyl-cyclohexyl)-methan des Typs Laromin C260 mit Handelsnamen 3,3'-Dimethyl-4,4' diaminodicyclohexylmethan (CAS-Nr. 6864-37-5 der Fa. BASF) und aus 100 Mol% Dodecandisäure.

Zur Einstellung der gewünschten relativen Viskosität, gemessen in 0,5% iger m-Kresollösung von 1,65 - 2,00, bevorzugt 1,70 bis 1,95, können entweder das Diamin oder die Dicarbonsäuren in entsprechendem Überschuss eingesetzt werden. Bevorzugt wird die Regelung mit Monoamin oder Monocarbonsäuren von 0,01 bis 2,0 Gew.-%, bevorzugt 0,05 bis 0,5 Gew.-%.

Geeignete Regler sind Benzoesäure, Essigsäure, Propionsäure, Stearylamin oder Mischungen. Besonders bevorzugt sind Regler mit Amin- oder Carbonsäuregruppen die Stabilisatorgruppen des Typs HALS oder des Typs tertiär-Buthyl-Phenol enthalten wie beispielsweise Triacetondiamin oder das Isophthalsäure-di-Triacetondiamin-derivate.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate, die gleichzeitig zu Reduktion der Verfärbung während der Verarbeitung führen, im Bereich 0,01-0,5 Gew.%, bevorzugt 0,03 bis 0,1 Gew.%.

Geeignete Entschäumer zur Vermeidung der Schaumbildung während der Entgasung sind wässrige Emulsionen, die Silicone oder Siliconderivate enthalten, im Bereich von 0,01 bis 1,0 Gew.%, bevorzugt 0,01 bis 0,10 bei 10%iger Emulsion.

Geeignete Hitze- oder UV-Stabilisatoren können bereits vor der Polykondensation dem Ansatz in Mengen von 0.01 bis 0.5 Gew.% zugegeben werden. Bevorzugt werden hochschmelzende Typen eingesetzt, besonders bevorzugt ist Irganox 1098 oder Nylostab-SEED, Tinuvin 770, Tinuvin 320, Tinuvin 326, Tinuvin 327.

Die Herstellung der erfindungsgemäßen Formmasse erfolgt in bekannten Druckautoklaven. Zunächst wird eine Druckphase bei 260-310 °C gefahren. Danach folgt die Entspannung bei 260-310 °C. Die Entgasung wird bei 260-310 °C durchgeführt. Anschliessend wird die Formmasse in Strangform ausgetragen, im Wasserbad mit 5-80 °C gekühlt und granuliert. Das Granulat wird 12 Stunden bei 80 °C auf einen Wassergehalt unter 0,06 % getrocknet.

Während der Trocknung mit gleichzeitiger Umwälzung des Granulates können Additive wie Gleitmittel, Farbstoffe, Stabilisatoren oder andere auf das Granulat aufgetragen oder aufgesintert werden.

Bevorzugte transparente oder transluzente, einfärbbare Polyamidformmassen mit Aromaten enthalten aromatische Dicarbonsäuren wie beispielsweise Isophthalsäure, Terephthalsäure oder Naphthalindicarbonsäure jeweils alleine oder als Mischung, wobei die Isophthalsäure den grössten Anteil bildet. Selbstverständlich können auch die entsprechenden Ester oder andere substituierte Derivate eingesetzt werden. Durch gezielte Auswahl verschiedener symmetrischer oder asymmetrischer Isomerer der Naphthalindicarbonsäure kann das Kristallisationsverhalten beeinflusst werden. Ein Teil der aromatischen Dicarbonsäuren kann durch aliphatische ersetzt sein.

Geeignete Diamine enthalten vorzugsweise aromatische Kerne wie beispielsweise meta-Xylylendiamin oder para-Xylylendiamin oder stammen aus der Gruppe der aromatischen Diamine oder der substituierten aromatischen Diamine und können alleine oder als Mischung eingesetzt werden. Der kleinere Teil der aromatischen Diamine kann durch aliphatische oder cycloaliphatische Diamine ersetzt sein.

Die bevorzugte erfindungsgemäße transparente oder transluzente, eingefärbte Polyamidformmasse mit einem Brechungsindex grösser 1,59, bevorzugt grösser 1,6, enthält einen überwiegenden Massenanteil aus Diaminen und Dicarbonsäuren mit aromatischen Kernen der Formel (A):

-{IPS-NH-R₁-NH}ₙ₁-{TPS-NH-R₂-NH}ₙ₂-{CO-R₃-NH}ₙ₃- (A)

worin:
n₁ = 40 bis 100 Gew.%-Anteile,
n₂ = 60 bis 0 Gew.%-Anteile,
n₃ = 0 bis 30 Gew.%-Anteile bedeuten und wobei sich die Gew.%-Anteile n₁, n₂ und n₃ auf 100 Gew.% ergänzen,
wobei die Diamine mit den Kernen R₁, R₂ gleich oder verschieden sein können und Diamin, aus para-Xylylen oder meta-Xylylen Einheiten bestehen und aus linear aliphatischen oder verzweigten (CH₂)2 bis (CH₂)12 Ketten oder aus Ketten mit cycloaliphatischen Kernen bestehen können, die einzeln oder als Mischungen eingesetzt werden (vgl. Anspruch 21).

100 Mol% der Dicarbonsäuren mit mindestens 40 Mol% Isophthalsäure (IPS) und als Rest Therephthalsäure (TPS), die vollständig oder teilweise durch Naphthalindicarbonsäuren ersetzt sein kann.

Bis zu 30 Gew.% der Formmasse können durch Aminosäuren oder Lactame mit Kern R3, bestehend aus (CH₂)5 bis (CH₂)11 Kernen, ersetzt sein.

Bevorzugt ist eine Zusammensetzung gemäß Formel (B):

MXDI/MXDT/6I/6T (B),

mit Meta-xylylen-diamin (MXD) von 20 und 100 Mol% ,
Hexamethylendiamin (6) von 80 bis 0 Mol%,
Isophthalsäure (I) von 50 bis 100 Mol%, und
Terephthalsäure (T) von 50 bis 0 Mol% vorhanden ist, bezogen auf 100 Mol% Diamin und 100 Mol% Dicarbonsäuren. Wobei meta-Xylylendiamin ganz oder teilweise durch para-Xylylendiamin ersetzt sein kann und Terephthalsäure ganz oder teilweise durch Naphthalindicarbonsäure ersetzt wird, wobei symmetrische oder asymmetrische Isomere oder Mischungen daraus eingesetzt werden können (vgl. Anspruch 22). Bevorzugt sind die asymmetrischen Isomere.

Besonders bevorzugt ist eine Zusammensetzung gemäß Formel (B):

MXDI/MXDT/6I/6T (B)

mit Meta-xylylen-diamin (MXD) von 20 und 80 Mol% ,
Hexamethylendiamin (6) von 80 bis 20 Mol%,
Isophthalsäure (I) von 60 bis 80 Mol%, und
Terephthalsäure (T) von 40 bis 20 Mol% , bezogen auf 100 Mol% Diamin und 100 Mol% Dicarbonsäuren.

Besonders bevorzugt ist eine Zusammensetzung gemäß Formel (C):

6I/6T/6NDC (C)

mit Naphthalindicarbonsäure (NDC) von 20 und 80 Mol% , mit symmetrischer oder asymmetrischer Substituentenstellung oder Mischungen daraus,
Isophthalsäure (I) von 80 bis 20 Mol%, und
Terephthalsäure (T) von 40 bis 0 Mol%,
Hexamethylendiamin (6) von 100 Mol%, das ganz oder teilweise durch Ethylendiamin, Trimethylhexamethylendiamin, oder lineare Diamine mit 8 bis 12 CH₂-Gruppen, oder Cycloaliphatische Diamine wie Norbornandiamin, 4,4'-diaminodicyclohexylmethan, 3,3'-Dimethyl-4,4'-diaminodicyclohexylmethan oder Mischungen daraus ersetzt sein kann, bezogen auf 100 Mol% Diamin und 100 Mol% Dicarbonsäuren.

Geeignete Diamine mit aromatischen Kernen sind beispielsweise meta-Xylylen-diamin, para-Xylylendiamin.

Geeignete aliphatische Diamine oder aliphatische Dicarbonsäuren sind solche mit 2 bis 12 CH₂-Einheiten, die unverzweigt oder verzweigt vorliegen können.

Geeignete cycloaliphatische Diamine oder cycloaliphatische Dicarbonsäuren enthalten Gerüste wie Norbornyl-, Cyclohexyl-, Dicyclohexylmethan, Dicyclohexylpropan, Di(methylcyclohexyl)methan, Di(methyl-cyclohexyl)propan.

Geeignete Dicarbonsäuren mit aromatischen Kernen sind Isophthalsäure (IPS), Therephthalsäure (TPS), Naphthalindicarbonsäure mit verschiedenen symmetrischen und asymmetrischen Isomeren, deren Mischungen, eingesetzt als Säuren oder deren Ester und Mischungen daraus.

Zur Beschleunigung der Reaktion während der Polykondensation können zum wässrigen Ansatz entsprechende phoshorhaltige Katalysatoren wie beispielsweise H₃PO₂, H₃PO₃, H₃PO₄ in Mengen von 0,01 bis 0,2 Gew.% zugegeben werden.

Zur Stabilisierung der Farbe gegenüber der Polymerisation und der späteren Verabeitung können phosphorhaltige Stabilisatoren des Typs R₃PO₂, R₃PO₃, R₃PO₄ in Form der Säuren mit R=H oder organischen linearen oder cylischen Resten in Mengen von 0,01 bis 0,2 Gew.% oder solche, die sterisch gehinderte Phenole enthalten in Mengen von 0,01 bis 0,2 Gew.% eingesetzt werden.

Zur Regelung der Kettenlänge werden entweder monofunktionelle Amine oder monofunktionelle Säuren einpolymerisiert, oder mit Überschuss an Diamin oder Dicarbonsäure gearbeitet. Besonders bevorzugt sind Reglertypen mit Stabilisatorfunktionen, wie beispielsweise mehrfach substituierte Piperidinyl-Guppen und tertiär-butyl-phenyl-Gruppen.

Die erfindungsgemäßen Polyamidformmassen können Additive enthalten wie UV-Absorber, die beispielsweise UV-Licht unter 400 nm ausfiltern oder Farben zum Tönen der Linsen oder thermotrope- oder thermochrome Additive, die temperaturabhängig sind oder abhängig von der Wellenlänge des eingestrahlten Lichtes den Farbton ändern oder isorefraktive gepfropfte Kern-Mantel Polymerer zur Schlagzähausrüstung oder Gleitmittel und weitere Verabeitungshilfen oder isorefraktive Verstärkungstoffe wie Glasfasern oder Kugeln oder Antibeschlagausrüstung.

Die erfindungsgemäße Polyamidformmasse wird nach einem bekannten Kondensationsverfahren in Druckautoklaven hergestellt, dessen besonderes Merkmal darin besteht, dass kein Prozessschritt im Kessel den Druck von 4 bar überschreitet. Bei höheren Drücken neigen diese Diamine mit aromatischem Kern zur Ausbildung von Verzweigungen, die die Schmelzeviskosität, beispielsweise bei 260 °C, drastisch erhöhen und damit das Austragen aus den Reaktoren unmöglich machen.

Geeignete Verfahren, zum Einarbeiten von gewünschten Additiven wie UV-Absorber die beispielsweise UV-Licht unter 400 nm ausfiltern oder Farben zum Tönen der Linsen oder phototrope- thermotrope- oder thermochrome Additive, die temperaturabhängig oder abhängig von der Wellenlänge des eingestrahlten Lichtes den Farbton ändern oder isorefraktiven gepfropfter Kern-Mantel Polymerer zur Schlagzähausrüstung, sind die bekannten Compoundierverfahren im Extruder.

Geeignete Verfahren zur Umformung des Granulates in Einstoff-Linsen sind alle für Thermoplasten bekannte Verfahren, insbesondere das Spritzgiessen in Mehr-Kavitäten-Werkzeugen.

Ferner erlauben die erfindungsgemäßen Formmassen die Herstellung von Verbundlinsen, aus hinterspritzten Folien oder anderen Formteilen, die Polarisationseigenschaften besitzen oder mit UV-Absorbern, die beispielsweise UV-Licht unter 400 nm ausfiltern oder mit Farben zum Tönen der Linsen oder mit phototropen-, thermotropen- oder thermochromen Additiven, die temperaturabhängig oder abhängig von der Wellenlänge des eingestrahlten Lichtes den Farbton ändern, ausgerüstet sind. Ferner können Verbundlinsen durch Hinterspritzen von Schutzfolien mit dem Linsenmaterial hergestellt werden, wodurch die Chemikalienresistenz oder die mechanische Beanspruchbarkeit oder das Gleit- oder Abriebverhalten verbessert werden können.

Geeignete Anwendungen für die erfindungsgemäßen, hochbrechenden Formmassen sind optische Linsen für Brillen, Kameras, Ferngläser, Mikroskope, elektrooptische Mess- und Prüfgeräte, optische Filter, Scheinwerferlinsen, Lampenlinsen, Projektoren und Beamer, Sichtfenster und Schaugläser.

Zur Veredelung der Oberflächen können die bekannten Verfahren wie Lackieren mit Hardcoat, Softcoat oder UV-Schutzlack, bedampfen mit Kohlenstoff oder mit Metallatomen, PlasmaBehandlung und Aufpolymerisieren von Schichten angewendet werden.

Diese erfindungsgemäße Formmassen können selbstverständlich als Blendkomponenten in anderen amorphen oder teilkristallinen Polyamiden eingesetzt, und mit den üblichen Verstärkungsstoffen, Nanoparikeln, Schlagzähmodifikatoren, Farben, Flammschutzmitteln, Weichmachern, Stabilisatoren, Gleitmittel ausgerüstet werden.

Bevorzugte transparente Polyamid-Blends bestehen aus einem Polyamid (I) gemäß der Zusammensetzung nach Formel Ia/Ib und mindestens einem teilkristallinen Polyamid (II) gemäß der Zusammensetzung nach Formel IIa/IIb. Die Anteile Polyamid (I) und Polyamide (II) werden im Verhältnis 99:1 bis 1:99 eingesetzt, bevorzugt 10:90 bis 90:10, so dass die Summe gleich 100 Teile ist (vgl. Anspruch 25).

Als weitere Komponente wird mindestens eine Phosphorverbindung der Formel (III) in der Mengen 0,01 bis 2 Teile bezogen auf 100 Teile Polyamide oder der Formel (IV) in Mengen von 0,01 bis 15 Teile bezogen auf 100 Teile Polyamide zugegeben, womit gleichzeitig eine flammhemmende Wirkung erzielt wird. Selbstverständlich können die Phosphorverbindungen gemäß Formel (III) und Formel (IV) als Mischungen eingesetzt werden.

Wahlweise kann ein oder mehrere übliche Stabilisatoren von 0 bis 2 Teilen bezogen auf 100 Teile Polyamide zugesetzt werden.

Selbstverständlich können Füll- und Verstärkungsstoffe, Flammschutzmittel, Weichmacher, Gleitmittel, Farbstoffe, Verarbeitungshilfsmittel und andere bekannte Ausrüstungsmittel zugegeben werden.

Das Polyamid (I) enthält die Monomerzusammensetzung gemäß Formel (Ia) und (Ib):

⁅(̵OOC-X-COO)̵ₐ(̵HN-Y-NH)̵ₐ(̵OOC-Z-NH)̵_{b}⁆_{c} **(Ia) ,**

⁅(̵OOC-X₁-COO)ₐ₁(HN-Y₁-NH)ₐ₁(OOC-Z₁-NH)_{b1}]_{c1} **(Ib) ,**

worin,
- X =: meta-Phenyl, para-Phenyl, (CH₂) 4 bis 12 CH₂-Einheiten, Cyclohexyl, Naphtyl, Norbornyl, Norbornandimethyl, Trimethyl-hexamethylen,
- X₁ =: meta-Phenyl, para-Phenyl, (CH₂): 2 bis 12 CH₂-Einheiten, Cyclohexyl, Naphtyl, Norbornyl, Norbornandimethyl, Trimethyl-hexamethylen,
- Y =: (CH₂): 2 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norborndimethyl, Trimethyl-hexamethylen, Bis-(cyclohexyl)-methan, Bis-(cyclohexyl)-ethan, Bis-(cyclohexyl)-propan,
- Y₁ =: (CH₂): 2 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornandimethyl, Trimethyl-hexamethylen, Bis-(cyclohexyl)-methan, Bis-(cyclohexyl)-ethan, Bis-(cyclohexyl)-propan,
- Z =: (CH₂) 4 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornyldimethyl,
- Z₁ =: (CH₂) 4 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornandimethyl, Trimethyl-hexamethylen,
bedeuten und
a = 0 - 50 mol%, b = 0 - 100 mol% a₁ = 0 - 50 mol%, b₁ = 0 - 100 mol% und
die Summe a+a₁+b+b₁ 100 mol%, ergibt die Summe c + c₁ 100 Gew.% ergeben,
- und das teilkristalline Polyamid (II), durch Ketten mit den Formeln IIa und/oder IIb dargestellt wird:

   ⁅(̵HN-u-COO)_{d}(HN-v-COO)_{c}(HN-s-NH)_{f}(OOC-t-COO)_{f}]_{g} **(IIa) ,**

   ⁅(̵NH-s₁-NH)_{f1}(OOC-t₁-COO)_{f1}]_{g1} **(IIb) ,**

   worin:
   u = (CH₂) 4 bis 12 CH₂-Einheiten, v= (CH₂): 4 bis 12 CH₂-Einheiten,
   s,s₁= (CH₂): 2 bis 12 CH₂-Einheiten, meta-Phenyl, para-Phenyl,
   t,t₁ = (CH₂) 2 bis 12 CH₂-Einheiten, meta-Phenyl, para-Phenyl,
   bedeuten und
   f= 0 - 50 mol%, d= 0 - 100 mol%
   f₁= 0 - 50 mol%, e = 0 - 100 mol%,
   wobei die Summe f+f₁+d+e 100 mol% und
   die Summe g+g₁ 100 Gew.% ergibt
   und
- mindestens 0,01 bis 2,0 Gew.-Teile, bezogen auf 100 Gew.-Teile der Polyamide der Formeln Ia/Ib, IIa/IIb, einer Phosphorverbindung, die in reiner Form oder als wässerige Lösung eingesetzt werden kann, gemäß Formel III:

   [X(R')ₙP(O)l(OR")ₘ] **(III) ,**

   worin bedeuten:
   X= H, -OR", 2-pyridyl, -NH₂, -NHR', -NR'R" , wobei X an (R') oder direkt an P gebunden sein kann,
   R' = (CH₂)ₙ₁ linear oder verzweigt ist,
   R"= Li, Na, K, H, (CH₂)ₙ₂ linear oder verzweigt ist
   und
   n = ganze Zahl von 0 bis 5; 1 = 0, 1, 1,5, 2, 2,5; m = ganze Zahl von 0 bis 3, n₁ = ganze Zahl von 1 bis 12, n₂ = 1 bis 12 sind,
   und/oder
- 0,01 bis 15 Gew.-Teile, bezogen auf 100 Gew.-Teile der Polyamide der Formeln Ia/Ib, IIa/IIb, von cyclischen Phosphonsäureanhydrid-Verbindungen gemäß Formel (IV), die in reiner Form oder als wässerige Lösung eingesetzt werden können:

   ⁅(R)PO(O)-]ₙ **(IV) ,**

   worin
   - n =: 3, 4, 5, 6, ist alternierender -P-O- Heterocyclus mit 3, 4, 5, 6 (P-O) Einheiten im Ring,
   - R =: CH₃, C₂H₅, C₃H₇, C₄H₉, Isobutyl, 2,2,6,6-tetramethyl-4-piperidyl bedeuten.

Selbstverständlich können auch Mischungen der Phosphorverbindungen eingesetzt werden.

Geeignete Herstellungsverfahren für die erfindungsgemäßen Polyamid-Blends sind alle bekannten Extrusionsverfahren, wenn Extrusionstemperaturen mit resultierenden Massetemperaturen zwischen 250 und 330°C angewendet werden.

Geeignete Verarbeitungsverfahren für die erfindungsgemäßen Polyamid-Blends sind thermoplastische Verarbeitungsverfahren, durch die bei Temperaturen von 200 bis 350°C Formteile, Folien, Platten, Fasern, Rohre, Stäbe hergestellt werden.

Geeignete Anwendungen für Formteile, Folien, Platten, Fasern, Rohre, Stäbe und Beschichtungen aus den erfindungsgemäßen Polyamid-Blends sind Brillen, Linsen, Beleuchtungsanlagen, Spiegel, Scheiben, Schaugläser, optische Bauteile, Armaturen, Flaschen, Behälter, medizinische-, kosmetische- und Hygiene-Artikel, Zahnbürsten, Griffe, Verpackungen, Modeschmuck, Kaschierfolien, Verbundfolien, Coextrusionsfolien, plattenförmiges Halbzeug, zylindrisches Halbzeug, Lichtwellenleiter, Lichtleiterfasern, Kabelummantelung, Rohre und Leitungen. Oder aus Lösung hergestellte Schutzüberzüge, Lacke und Isolierungen für Drähte, Gitter, Körbe, Bleche, Magnetspulen, Ablenkspulen.

Die Herstellung der erfindungsgemäßen Kunststoff- oder Polyamidformmassen durch Ausrüsten mit den erfindungsgemäßen, Gleitmitteln kann auf drei Wegen erfolgen:
a. Vermischen der Flüssigkeit, enthaltend das Gleitmittel mit dem Granulat
b. Herstellen eines Masterbatch Granulates und Herstellung einer Granulatmischung
c. Zugabe des Gleitmittels vor oder während der Polymerisation beziehungsweise der Kondensation

Die erfindungsgemäßen Formmassen können zusätzlich einen UV-Schutz enthalten, der in 2 mm Linsen die Lichtdurchlässigkeit der für das Auge schädlichen Wellenlängen unter 400 nm bis auf unter 0,5 % reduziert.

Geeignete UV-Absorber sind Hydroxyphenylbenzotriazole oder Hydroxyphenylchlorobenzotriazole, wie beispielsweise Tinuvine, Uvinule oder andere.

Die Zugabe der UV-Absorber kann durch Mischen mit dem Granulat der erfindungsgemäßen Formmasse erfolgen oder durch Zugabe als separat hergestellter Masterbatch in Granulatform,
der durch Extrusion der erfindungsgemäßen Formmassen mit einer erhöhten Konzentration des UV-Absorbers auf Extrudern in Form von Granulat hergestellt wurde.

Als Variante können die erfindungsgemäßen Gleitmittel in diesen UV-Masterbatch eingearbeitet werden. Als Basismaterial für den UV-Masterbatch können auch transparente Polyamidformmassen verwendet werden, die sich von der erfindungsgemäßen Formmasse unterscheiden aber keine starke Trübung verursachen.

Besonders vorteilhaft ist die Herstellung der erfindungsgemäßen Formmasse, wenn alle Additive in einem Schritt im Extruder eingearbeitet werden und als einheitliches Granulat vorliegen.

Diese erfindungsgemäßen Formmassen werden im nächsten Schritt auf einer Spritzgussanlage, beispielsweise der Fa. Arburg, Typ Allrounder 270 °C 500 -100 (Clamping force 500 kN) verarbeitet.

Typische Einstellparameter für die Verarbeitung der Formmassen aus den Vergleichsbeispielen beziehungsweise Beispielen 1 - 35 sind:

| | |
|---|---|
| Zylindertemperatur: | 260, 265, 270, 270, 270 °C |
| | (special high settings, hopper to nozzle) |
| Werkzeugtemperatur: | 80°C |
| Schneckenumfangsgeschwindigkeit: | 15 m/min (special high setting) |
| Staudruck spez. : | 50 bar |
| Einspritzgeschwindigkeit: | 15 cm³/s |
| Einspritzvolumen: | 20 cm³ (max. 47 cm³ = 43%) |
| Umschaltpunkt auf Nachdruck: | 3 cm³ |

Mit einem hochpolierten Werkzeug mit 1 Kavität in Linsenform, planparallel mit 2 mm Dicke wurden aus der erfindungsgemäßen Formmasse entsprechende Prüflinsen hergestellt. Die Linsenqualität wurden auf Reinheit, Haze, Clarity und Lichttransmission geprüft.

Beim upscaling auf einem 4 Kavitäten Werkzeug wurde die erfindungsgemäße Formmasse auf Prozessfähigkeit untersucht. Während mehrtägiger Linsenherstellung wurde das Werkzeug auf Beläge geprüft und beobachtet nach welchen Laufzeiten die Schnecke gereinigt werden muss.

Die Linsen aus dem upscaling Prozess wurden auf einem Perkin Elmer UV-Spektrometer auf die Charakteristik der Lichttransmission geprüft.

Die entscheidende Eigenschaft der Haftung wurde an einem Standardlack System geprüft, das zur Verbesserung der Kratzfestigkeit nach üblichen Prozessen aufgetragen und auf Ihre Haftung auf der Linse geprüft wird. Dabei wurden Gitterschnitte vor und nach UV Alterung und nach Kochwasserlagerung aufgebracht und bewertet.

Besonders bevorzugt sind Hardcoats der Fa. SDC Coating Inc. wie beispielsweise TC 1179 oder einfärbbare Hardcoats, wie beispielsweise TC-3000, die mit oder ohne Primerschicht, wie beispielsweise Primer PR 1165, aus Lösung auf das Formteil, hergestellt durch thermoplastische Formgebungsverfahren oder Formgebungsverfahren für reaktive Gussmassen, wie beispielsweise für PU-Gussmassen, aufgezogen und ausgehärtet werden.

Besonders bevorzugt sind Bedampfungsmethoden (Sputtering) zum Aufbringen von Schichten auf diese Formteile, wo beispielsweise eine Silizium Hartschicht oder eine Tönung durch Verdampfung von Metallen mit oder ohne Vorbereitung durch Plasmabehandlung erzeugt wird.

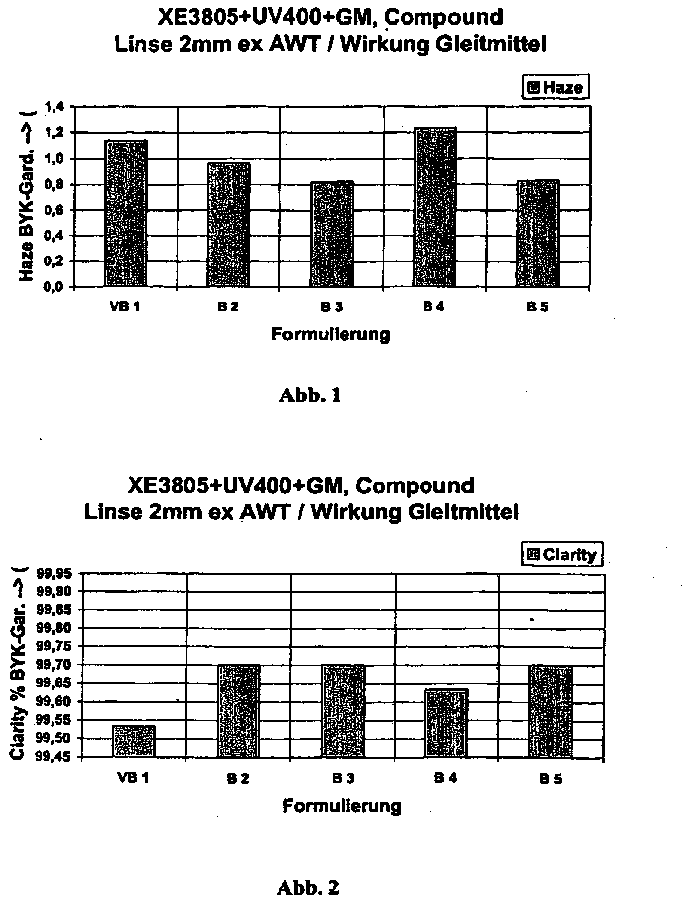

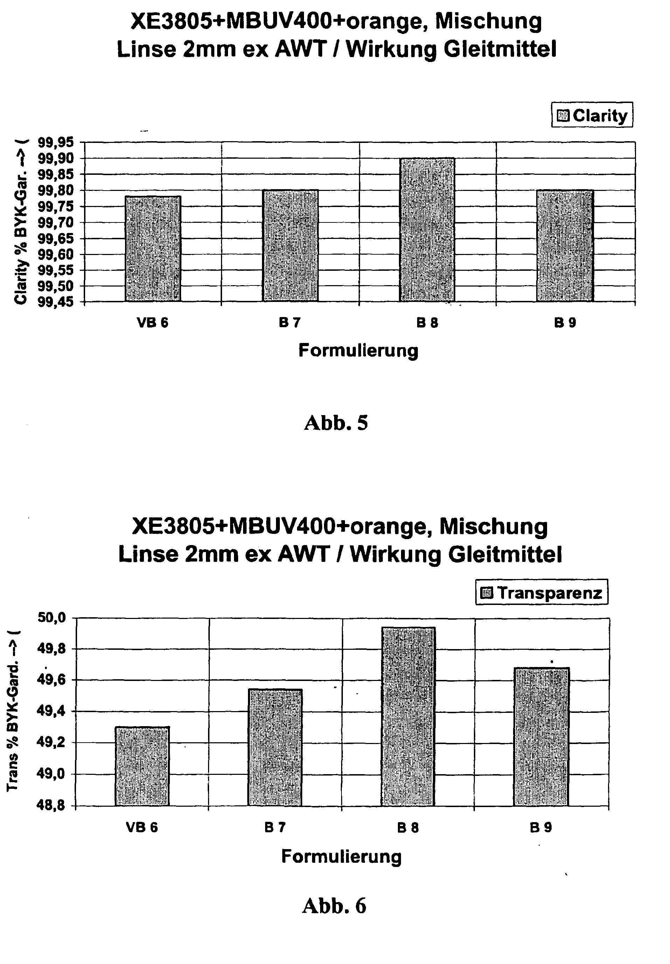

Die Erfindung wird nun anhand der folgenden Beispiele unter Einbeziehung der Abbildungen 1 bis 7 sowie der Tabellen 1 bis 4 näher beschrieben, ohne jedoch die Erfindung darauf einzuschränken.

Die in den Beispielen verwendenden Abkürzungen sowie Materialien finden sich weiter unten.

### Vergleichsbeispiel 1

Hochtransparentes Polyamid des Typs MACM12 mit Tg 155°C und relativer Viskosität von 1,73 (0,5 % m-Kresol) wurde mit 4 % Grilamid TR MB XE3805 UV400, beides Handelsprodukte der Fa. Ems Chemie AG, in Granulatform gemischt und auf einem Zweiwellen-Extruder (WP ZSK30, 280 °C) extrudiert, zu Granulat geschnitten und auf eine Feuchte unter 0,06 % getrocknet.

Dieses Granulat wurde auf einer Spritzgussmaschine zu planparallelen Linsen mit 75 mm Durchmesser und 2 mm Dicke verarbeitet. Die Messung der Linsen erfolgt durch Einstrahlen des Lichtes auf die konvexe Seite. Der UV-Absorption liegt unter 99,8 % bis 400 nm.

Die Lichtdurchlässigkeit liegt bei 89,9 %. Die erhaltenen Linsen Eigenschaften wurden auf einem Byk Gardner Haze Messgerät gemessen (Abb. 1-3).

### Beispiel 2, 3 und 5 (erfindungsgemäß); Vergeichsbeispiel 4

Zur Granulatmischung aus Beispiel 1 wurden verschiedene Gleitmittel zugemischt, anschliessend extrudiert, zu Granulat geschnitten, auf eine Feuchte unter 0,06 % getrocknet und in der gleichen Art zu Prüflinsen verarbeitet. Der UV-Schutz liegt in den Beispielen 2 - 5 bei 99,8 % bis 400 nm.

| | |
|---|---|
| Beispiel 2: | + 0,05 % Paraffinöl (HTNP) (flüssig) |
| Beispiel 3: | + 0,10 % Paraffinöl (HTNP) (flüssig) |
| Vergleichsbeispiel 4: | + 0,10 % Kalziumstearat (KS) (Pulver) |
| Beispiel 5: | + 0,10 % gesättigter Polyoxyethylen Sorbitan Fettsäureester (flüssig) |
| | Typ: Polysorbat 20 (PS20) |

Der Vergleich der optischen Eigenschaften (Abb. 1-3) zeigt, dass die flüssigen Gleitmittel die niedrigsten Haze Werte in %, die höchste Clarity in % und deutlich verbesserte Transmissionswerte in % nach Byk Gardner zeigen. In Bezug auf die Transparenz zeigt das Paraffinöl HTNP (0,1 %) mit 90,3 % die höchsten Werte. Das pulverförmige Kalziumstearat zeigt die höchste Trübung mit Haze 1,2 %.

### Vergleichsbeispiel 6

Hochtransparentes Polyamid des Typs MACM12 mit Tg 155°C und relativer Viskosität von 1,73 (0,5 % m-Kresol) wurde mit 4 % Grilamid TR MB XE3805 UV400, beides Handelsprodukte der Fa. Ems Chemie AG, in Granulatform gemischt und auf einem Zweiwellen Extruder (WP ZSK30, 280 °C) extrudiert, zu Granulat geschnitten, auf eine Feuchte unter 0,06 % getrocknet und mit Farbpigment orange gemischt.

Diese Mischung wurde auf einer Spritzgussmaschine zu planparallelen Linsen mit 75 mm Durchmesser und 2 mm Dicke verarbeitet. Die Messung der Linsen erfolgt durch Einstrahlen des Lichtes auf die konvexe Seite. Der UV-Schutz liegt bei 99,8 % bis 400 nm.

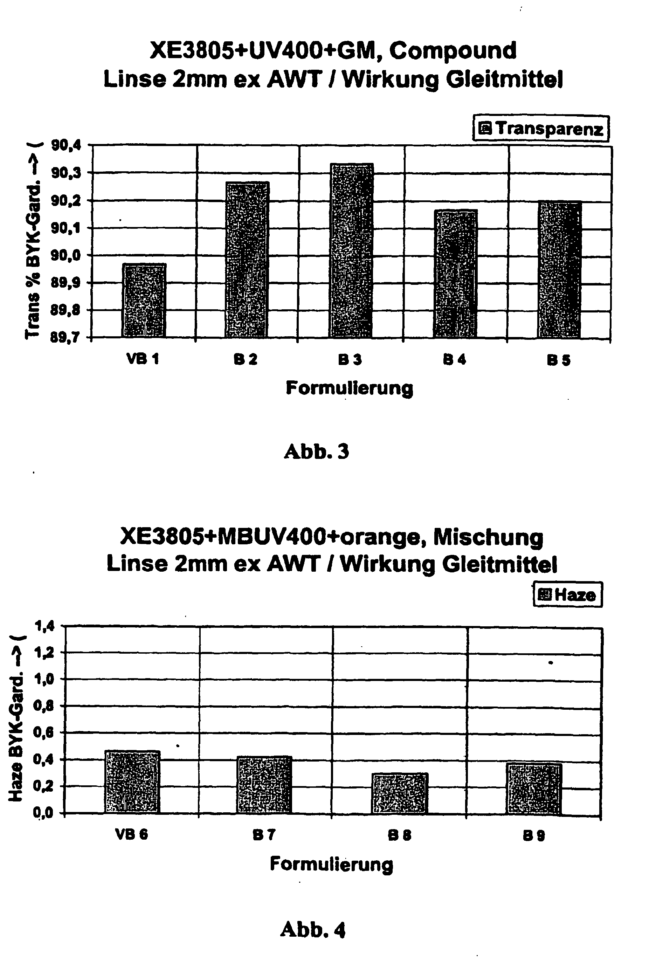

Die Lichtdurchlässigkeit liegt bei 49,3 %. Die erhaltenen Linsen Eigenschaften wurden auf einem Byk Gardner Haze Messgerät gemessen (Abb. 4-6).

### Beispiel 7 und 8 (erfindungsgemäß); Vergleichsbeispiel 9

Zur Granulatmischung aus Beispiel 1 wurden verschiedene Gleitmittel zugemischt, und in der gleichen Art zu Prüflinsen verarbeitet. Der UV-Schutz liegt in den Beispielen 7 - 9 bei 99,8% bis 400 nm.

| | |
|---|---|
| Beispiel 7: | + 0,05 % Paraffinöl (HTNP) (flüssig) |
| Beispiel 8: | + 0,10 % Paraffinöl (HTNP) (flüssig) |
| Vergleichsbeispiel 9: | + 0,10 % Kalziumsearat (KS) (Pulver) |

Der Vergleich der optischen Eigenschaften (Abb. 4-6) zeigt, dass das flüssige Gleitmittel HTNP die niedrigsten Haze Werte in % und die höchste Clarity in % und deutlich verbesserte Transmissionswerte in % nach Byk Gardner zeigen. Die Verteilung des pulverförmigen Farbpigmentes gelingt mit HTNP deutlich besser.

### Vergleichsbeispiel 10

Hochtransparentes Polyamid des Typs MACM12 mit Tg 155°C und relativer Viskosität von 1,73 (0,5% m-Kresol), ein Handelsprodukt der Fa. Ems Chemie AG, wurde auf einer Spritzgussmaschine zu planparallelen Linsen mit 75 mm Durchmesser und 2 mm Dicke verarbeitet. Eingesetzt wurde ein 4 Kavitäten Werkzeug mit sternförmig angeordneten Kavitäten und Kaltkanal.

Geprüft wurde die Produktionszeit, bis in den Linsen schwarze Partikel erkennbar werden, die eine Belagsbildung auf der Plastifiziereinheit in der Spritzgussmaschine anzeigen. Die Resultate sind in Tabelle 1 zusammengefasst.

### Beispiel 11 (erfindungsgemäß)

Hochtransparentes Polyamid des Typs MACM12 mit Tg 155°C und relativer Viskosität von 1,73 (0,5% m-Kresol), ein Handelsprodukt der Fa. Ems Chemie AG, wurde in Granulatform mit 0,05% HTNP gemischt.

Diese Mischung wurde auf einer Spritzgussmaschine zu planparallelen Linsen mit 75 mm Durchmesser und 2 mm Dicke verarbeitet. Eingesetzt wurde ein 4 Kavitäten Werkzeug mit sternförmig angeordneten Kavitäten und Kaltkanal.

Geprüft wurde die Produktionszeit, bis in den Linsen schwarze Partikel erkennbar werden, die eine Belagsbildung auf der Plastifiziereinheit in der Spritzgussmaschine anzeigen. Die Resultate sind in Tabelle 1 zusammengefasst.

### Vergleichsbeispiel 12

Hochtransparentes Polyamid des Typs MACM12 mit Tg 155°C und relativer Viskosität von 1,73 (0,5 % m-Kresol) wurde mit 4 % Grilamid TR MB XE3805 UV400, beides Handelsprodukte der Fa. Ems Chemie AG, in Granulatform gemischt.

Diese Mischung wurde auf einer Spritzgussmaschine zu planparallelen Linsen mit 75 mm Durchmesser und 2 mm Dicke verarbeitet. Eingesetzt wurde ein 4 Kavitäten Werkzeug mit sternförmig angeordneten Kavitäten und Kaltkanal.

Geprüft wurde die Produktionszeit, bis in den Kavitäten des Linsenwerkzeugs Beläge erkennbar werden. Die Resultate sind in Tabelle 1 zusammengefasst.

### Beispiel 13 (erfindungsgemäß)

Hochtransparentes Polyamid des Typs MACM12 mit Tg 155°C und relativer Viskosität von
1,73 (0,5 % m-Kresol) wurde mit 4 % Grilamid TR MB XE3805 UV400, beides Handelsprodukte der Fa. Ems Chemie AG, in Granulatform mit 0,05 % HTNP gemischt.

Diese Mischung wurde auf einer Spritzgussmaschine zu planparallelen Linsen mit 75 mm Durchmesser und 2 mm Dicke verarbeitet. Eingesetzt wurde ein 4 Kavitäten Werkzeug mit sternförmig angeordneten Kavitäten und Kaltkanal.

Geprüft wurde die Produktionszeit, bis in den Kavitäten des Linsenwerkzeugs Beläge erkennbar werden. Die Resultate sind in Tabelle 1 zusammengefasst.

### Vergleichsbeispiel 14

Hochtransparentes Polyamid des Typs MACM12 mit Tg 155°C und relativer Viskosität von 1,73 (0,5 % m-Kresol) wurde mit 4 % Grilamid TR MB XE3805 UV400, beides Handelsprodukte der Fa. Ems Chemie AG, in Granulatform mit 0,1 % Farbpigment braun gemischt.

Diese Mischung wurde auf einer Spritzgussmaschine zu planparallelen Linsen mit 75 mm Durchmesser und 2 mm Dicke verarbeitet. Eingesetzt wurde ein 4 Kavitäten Werkzeug mit sternförmig angeordneten Kavitäten und Kaltkanal.

Geprüft wurde die Produktionszeit, bis in den Kavitäten des Linsenwerkzeugs Beläge erkennbar werden. Die Resultate sind in Tabelle 1 zusammengefasst.

### Beispiel 15 (erfindungsgemäß)

Hochtransparentes Polyamid des Typs MACM12 mit Tg 155°C und relativer Viskosität von 1,73 (0,5 % m-Kresol) wurde mit 4 % Grilamid TR MB XE3805 UV400, beides
Handelsprodukte der Fa. Ems Chemie AG, in Granulatform mit 0,05% HTNP und 0,1 % Farbpigment braun gemischt.

Diese Mischung wurde auf einer Spritzgussmaschine zu planparallelen Linsen mit 75 mm Durchmesser und 2 mm Dicke verarbeitet. Eingesetzt wurde ein 4 Kavitäten Werkzeug mit sternförmig angeordneten Kavitäten und Kaltkanal.

Geprüft wurde die Produktionszeit, bis in den Kavitäten des Linsenwerkzeugs Beläge erkennbar werden. Die Resultate sind in Tabelle 1 zusammengefasst.

Die Beschichtung der Linsen erfolgt in Tauchbädern nach üblichen Verfahren für die Linsenbeschichtung. Zwei Systeme der Fa. SDC Coating Inc. wurden geprüft: a. Hardcoat TC 1179 und b. Primer PR 1165+Hardcoat HC 1179. Die Linsen werden in destilliertem Wasser im Ultraschallbad (23 °C) gereinigt und 20 Minuten an Luft getrocknet. Die gereinigte Linse wird in das Primerbad (23 °C) getaucht, mit 25 cm/min ausgezogen und 20 Minuten an Luft getrocknet. Zum Aufbringen des Hardcoat (HC) wird die Linse in das HC-Bad (23 °C) getaucht, mit 30 cm/min ausgezogen und 20 Minuten an Luft getrocknet. Das Aushärten erfolgt bei 115 °C / 2 h im Ofen. Danach werden die beschichteten Linsen vor und nach Alterung im Gitterschnitt geprüft (Tab. 1).

Dazu werden im Abstand von jeweils 1 mm horizontale und vertikale Linien in den Lack geschnitten (z.B. 5 x 5 Linien), so dass Lackquadrate mit 1 mm2 Fläche entstehen. Dieses Gitter wird mit einem Klebestreifen (z.B. Tesafilm) überklebt. Nach dem Abziehen des Klebestreifens wird die Anzahl der abgelösten Lackquadrate gezählt. Die Haftung wird in % der nicht abgelösten Lackquadrate zur Gesamtzahl der Lackquadrate angegeben.

**Tabelle 1**

| | VB10 | B11 | VB12 | B13 | VB14 | B15 |
|---|---|---|---|---|---|---|
| HTNP % | 0 | 0,05 | 0 | 0,05 | 0 | 0,05 |
| MBUV400 % | 0 | 0 | 4 | 4 | 4 | 4 |
| Farbpigment % | 0 | 0 | 0 | 0 | 0,1 | 0,1 |
| | | | | | | |
| Schneckenbelag h | 72 | > 168 | - | - | - | - |
| Werkzeugbelag h | | | 0,5 | 4,0 | 3,0 | 4,5 |
| Stabilität Prozess | mittel | gut | mittel | gut | schlecht | gut |
| Lackhaftung | | | | | | |
| SDC/HC-1179 | | | | | | |
| Bayer Abrassion | 350 | | | | | |
| Gitterschnitt original | 100% | 100% | 100% | 100% | 100% | 100% |
| Wasser 100°C / 1 h | 100% | 100% | 100% | 100% | 100% | 100% |
| UV-Alterung / 5 Tage | 60% | 60% | 60% | 60% | 60% | 60% |
| UV-Alterung / Aussehen * | kl. Risse | kl. Risse | kl. Risse | kl. Risse | kl. Risse | kl. Risse |
| SDC/Primer 1165/HC-1179 | | | | | | |
| Bayer Abrassion | 417 | | | | | |
| Gitterschnitt original | 100% | 100% | 100% | 100% | 100% | 100% |
| Wasser 100°C / 1 h | 100% | 100% | 100% | 100% | 100% | 100% |
| UV-Alterung / 5 Tage | 100% | 100% | 100% | 100% | 100% | 100% |
| UV-Alterung / Aussehen | I.O. | I.O. | I.O. | I.O. | I.O. | I.O. |

| | | | | | | |
|---|---|---|---|---|---|---|
| * kl. Risse: kleine Risse | | | | | | |

Durch Zugabe von HTNP können die Intervalle bis Schneckenbeläge entstehen deutlich verlängert werden. Die Intervalle bis Werkzeugbeläge entstehen werden ebenfalls verlängert, damit wird die Wirtschaftlichkeit des Prozesses deutlich verbessert, der gesamte Prozess verläuft wesentlich stabiler.

Die erwarteten negativen Auswirkungen auf die Haftung des Hartlackes treten auch nach UV-Alterung des Verbundes im "Atlas Suntester CPS+" nicht auf. Der Gitterschnitttest zeigt selbst bei 0, 1 % HTNP in der Formmasse keine Nachteile für die Haftung.

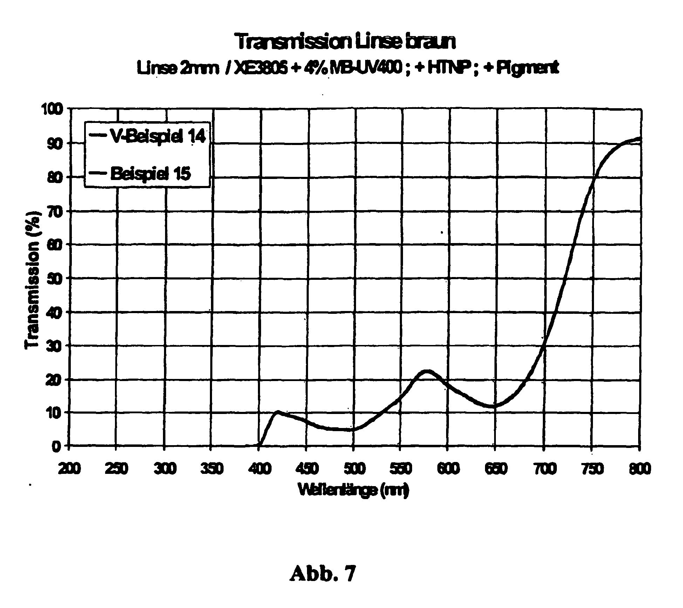

Die empfindliche Charakteristik der Lichttransmission und des UV-Schutzes sowie der Farbeindruck bleiben unverändert (Abb. 7). Die Transmissionskurven der Linsen aus Vergleichsbeispiel 14 und Beispiel 15 decken sich exakt.

### Vergleichsbeispiel 16

36,1 g MACM und 34,5 g DDS werden in 30 g Wasser im Rührkessel gemischt und drucklos unter Rühren aufgeheizt, bis zum jeweiligen Kochpunkt, so dass schrittweise 280 °C erreicht werden. Anschliessend wird ca. 2 h unter Rühren bei 280 °C entgast, bis das gewünschte Drehmoment erreicht ist. Danach wird die erhaltene transparente Polyamidschmelze abgekühlt, zerkleinert und auf einen Feuchtegehalt unter 0,06 % getrocknet. Die erhaltenen Stoffdaten sind in Tabelle 2 zusammengestellt.

### Beispiel 17 - 19 (erfindungsgemäß)

36,1 g MACM und 34,5 g DDS und verschiedene Mengen HTNP werden in 30 g Wasser im Rührkessel gemischt und drucklos unter Rühren aufgeheizt, bis zum jeweiligen Kochpunkt, so dass schrittweise 280 °C erreicht werden. Anschliessend wird ca. 2 h unter Rühren bei 280 °C entgast, bis das gewünschte Drehmoment erreicht ist. Danach wird die erhaltene transparente Polyamidschmelze abgekühlt, zerkleinert und auf einen Feuchtegehalt unter 0,06 % getrocknet. Die erhaltenen Stoffdaten sind in Tabelle 2 zusammengestellt.

**Tabelle 2**

| | VB16 | B 17 | B 18 | B 19 |
|---|---|---|---|---|
| HTNP % | 0 | 0,01 | 0,05 | 0,10 |
| | | | | |
| Rel, Viskosität 0,5% m-Kresol | 1,611 | 1,734 | 1,678 | 1,646 |
| Drehmoment Rührer (%) | 250 | 330 | 250 | 240 |
| Kondensationszeit (h) | 2,4 | 2,0 | 2,0 | 2,0 |
| | | | | |
| Glastemperatur Tg (°C) | 150 | 152 | 150 | 150 |
| Farbe visuell | gut | gut | gut | gut |

Die Beispiele zeigen, dass das flüssige HTNP ohne den Polykondensationsprozess zu stören bei der Herstellung der erfindungsgemäßen Formmasse direkt in den Ansatz gegeben werden kann. Der sichtbare mengenabhängige Einfluss auf die Viskosität kann durch Anpassen der Menge Kettenregler wieder ausgeglichen werden. Die Kondensationszeit wird durch Zugabe des HTNP vorteilhaft reduziert.

### Vergleichsbeispiel 20

Ein cycloaliphatisches Polyamid, hergestellt nach üblichen Verfahren, des Typs MACM12 (Bis-(4-amino-3-methyl-cyclohexyl)-methan der Fa. BASF: Laromin C 260 und Dodecandisäure) mit relativer Viskosität 1,73 (0,5 % m-Kresol) und Tg 155 °C wird auf einer Arburg Spritzgussmaschine mit Massetemperatur 280 °C und Formtemperatur von 60 °C auf Fliessfähigkeit geprüft. Der Fliesskanal im Werkzeug ist 1,5 mm dick und 10 mm breit und ist spiralförmig angeordnet. Gemessen wird die Fliesslänge bei 1000 bar in mm. Yellow Index und Lichtransmission werden an 60x50x3 mm Platten gemessen. Die Melt Flow Rate (MVR) wird bei 275 °C / 5 kg gemessen.

### Beispiel 21 (erfindungsgemäß)

Entsprechend Vergleichsbeispiel 20 wird das cycloaliphatische Polyamid mit einem Masterbatch, bestehend aus 90 % cycloaliphatischem Polyamid und 10 % Kalziumstearat, gemischt.

### Beispiel 22 (erfindungsgemäß)

Entsprechend Vergleichsbeispiel 20 wird das cycloaliphatische Polyamid mit einem Masterbatch, bestehend aus 90 % Polyamid 12 mit relativer Viskosität 1,6 (0,5 % m-Kresol) und 10 % Kalziumstearat, gemischt.

### Beispiel 23 (erfindungsgemäß)

Entsprechend Vergleichsbeispiel 20 wird das cycloaliphatische Polyamid mit einem Masterbatch, bestehend aus 90 % Polyamid 12 mit relativer Viskosität 1,6 (0,5 % m-Kresol) und 10 % HTNP, gemischt.

### Vergleichsbeispiel 24

Entsprechend Vergleichsbeispiel 20 wird ein Blend aus dem cycloaliphatischen Polyamid 75 % und einem Polyamid 12 mit relativer Viskosität von 2,5 eingesetzt.

### Beispiele 25 bis 27 (erfindungsgemäß)

Das Polyamidblend aus Beispiel 24 wird entsprechend der Beispiele 21 bis 23 mit den jeweiligen Masterbatches vermischt.

**Tabelle 3**

| | VB 20 | B 21 | B 22 | B 23 | VB 24 | B 25 | B 26 | B 27 |
|---|---|---|---|---|---|---|---|---|
| MACM12 % | 100 | 90 | 90 | 90 | 75 | 67,5 | 67,5 | 67,5 |
| PA12 % | | | | | 25 | 22,5 | 22,5 | 22,5 |
| MB % | | 10 | 10 | 10 | | 10 | 10 | 10 |
| | | | | | | | | |
| Fliesslänge mm | 180 | 193 | 190 | 212 | 205 | 225 | 225 | 232 |
| YI | 2,9 | 2,6 | 2,0 | 1,5 | 5,0 | 4,3 | 4,3 | 3,7 |
| Transmission %, 560 nm | 89 | 89 | 89 | 90 | 87 | 86 | 86 | 87 |
| MVR ccm/10min | 29 | 37 | 38 | 40 | 42 | 59 | 59 | 59 |

Die Matrix in den Beispielen der Tabelle 3 besteht aus PAMACM12 beziehungsweise einem PAMACM12/PA12-Blend. Von den verschiedenen Gleitmitteln in den jeweiligen Masterbatches zeigt das Gleitmittel aus Beispiel 23 und 27 das beste Verhalten in Bezug auf Fliesslänge und MVR, ohne die Transparenz negativ zu beeinflussen. Ausserdem bewirkt es eine leichte Reduktion im Yellow Index.

### Vergleichsbeispiel 28 und 32

Entsprechend Vergleichsbeispiel 20 und 24 wird ein aromatisches Copolyamid des Typs MACMI/12 mit relativer Viskosität 1,55 und Tg 160 °C eingesetzt. Die Formtemperatur wird auf 80 °C erhöht.

### Beispiele 29 bis 31 und 33 bis 35 (erfindungsgemäß)

Das Polyamidblend aus Beispiel 28 wird entsprechend der Beispiele 21 bis 23 mit den jeweiligen Masterbatches vermischt. Die Formtemperatur wird auf 80 °C erhöht.

**Tabelle 4**

| | VB 28 | B 29 | B 30 | B 31 | VB 32 | B 33 | B 34 | B 35 |
|---|---|---|---|---|---|---|---|---|
| MACMI/12 % | 100 | 90 | 90 | 90 | 75 | 67,5 | 67,5 | 67,5 |
| PA12 % | | | | | 25 | 22,5 | 22,5 | 22,5 |
| MB % | | 10 | 10 | 10 | | 10 | 10 | 10 |
| | | | | | | | | |
| Fliesslänge mm | 165 | 175 | 175 | 182 | 240 | 250 | 250 | 270 |
| YI | 3,1 | 2,2 | 2,2 | 2,2 | 8 | 10 | 10 | 10 |
| Transmission %, 560 nm | 86 | 86 | 87 | 87 | 86 | 86 | 86 | 86 |
| MVR ccm/10min | 20 | 24 | 22 | 28 | 54 | 71 | 69 | 76 |

Die Matrix in den Beispielen der Tabelle 4 besteht aus CoPAMACMI/12 beziehungsweise einem CoPAMACMI/12/PA12-Blend. Von den verschiedenen Gleitmitteln in den jeweiligen Masterbatches zeigt das Gleitmittel aus Beispiel 31 und 35 das beste Verhalten in Bezug auf Fliesslänge und MVR, ohne die Transparenz negativ zu beeinflussen.

### Vergleichsbeispiel 36

Ein cycloaliphatisches Polyamid, hergestellt nach üblichen Verfahren, des Typs MACM12 (Bis-(4-amino-3-methyl-cyclohexyl)-methan der Fa. BASF: Laromin C 260 und Dodecandisäure) mit relativer Viskosität 1,73 (0,5 % m-Kresol) und Tg 155 °C wird auf einer Arburg Spritzgussmaschine auf Entformungsverhalten geprüft.

Dazu wird ein leicht konischer Becher mit einem zentralen Stangenanguss hergestellt und die Entformkraft beim Ausstoßen gemessen. Der Becher besitzt die folgenden Dimensionen:

| | |
|---|---|
| Durchmesser am Boden: | 57 mm |
| Durchmesser an der Öffnung: | 58 mm |
| Höhe: | 94 mm |
| Wandstärke: | 3,5 mm |

Zur Verarbeitung werden folgende Parameter verwendet:

| | |
|---|---|
| Zylindertemperatur Zone 4 | 255°C |
| Zylindertemperatur Zone 3 | 260 |
| Zylindertemperatur Zone 2 | 265 |
| Temperatur Düse | 260 |
| Werkzeugtemperatur | 80 |
| Schneckenumfangsgeschwindigkeit | 9.4 m/min |
| Staudruck spez. | 100 bar |
| Einspritzgeschwindigkeit | 40 mm/s |
| Nachdruck /Nachdruckzeit | 600 bar /8s |
| | 400 bar /6s |
| | 200 bar /6s |
| Zykluszeit | 59 s |

### Vergleichsbeispiel 37

Entsprechend Vergleichsbeispiel 36 wird das cycloaliphatische Polyamid mit einem Masterbatch, bestehend aus 90 % aromatischem Copolyamid des Typs MACMI/12 mit relativer Viskosität 1,55 und Tg 160 °C und 10 % Kalziumstearat, gemischt.

### Vergleichsbeispiel 38

Entsprechend Vergleichsbeispiel 36 wird das cycloaliphatische Polyamid mit einen Masterbatch, bestehend aus 90 % cycloaliphatisches Polyamid und 10 % Kalziumstearat, gemischt.

### Beispiel 39 (erfindungsgemäß)

Entsprechend Vergleichsbeispiel 36 wird das cycloaliphatische Polyamid mit einen Masterbatch, bestehend aus 90 % cycloaliphatisches Polyamid und 10 % HTNP, gemischt.

Die bei den Vergleichsbeispielen 36 - 38 und dem erfindungsgemäßen Beispiel 39 gemessene Entformkraft ist der Tabelle 5 zu entnehmen.

### Vergleichsbeispiel 40

Ein aromatisches Copolyamid, hergestellt nach üblichen Verfahren, des Typs MACMI/12 (Bis-(4-amino-3-methyl-cyclohexyl)-methan der Fa. BASF: Laromin C 260, Isophthalsäure und Lactam 12) mit relativer Viskosität 1,55 (0,5 % m-Kresol) und Tg 160 °C wird auf einer Arburg Spritzgussmaschine wie in VB 37 auf Entformungsverhalten geprüft.

### Vergleichsbeispiel 41

Entsprechend Vergleichsbeispiel 40 wird das cycloaliphatische Polyamid mit einem Masterbatch, bestehend aus 90 % aromatischem Copolyamid des Typs MACMI/12 mit relativer Viskosität 1,55 und Tg 160 °C und 10 % Kalziumstearat, gemischt.

### Vergleichsbeispiel 42

Entsprechend Vergleichsbeispiel 40 wird das cycloaliphatische Polyamid mit einen Masterbatch, bestehend aus 90 % cycloaliphatisches Polyamid und 10 % Kalziumstearat, gemischt.

### Beispiel 43 (erfindungsgemäß)

Entsprechend Vergleichsbeispiel 40 wird das cycloaliphatische Polyamid mit einen Masterbatch, bestehend aus 90 % cycloaliphatisches Polyamid und 10 % HTNP, gemischt.

Die bei den Vergleichsbeispielen 40 - 42 und dem erfindungsgemäßen Beispiel 43 gemessene Entformkraft ist der Tabelle 5 zu entnehmen.

**Tabelle 5**

| | VB 36 | VB 37 | VB 38 | B 39 | VB 40 | VB 41 | VB 42 | B 43 |
|---|---|---|---|---|---|---|---|---|
| MACM 12 % | 100 | 96 | 96 | 96 | 0 | 0 | 0 | 0 |
| MACMI/12 % | 0 | 0 | 0 | 0 | 100 | 96 | 96 | 96 |
| MB% | 0 | 4 | 4 | 4 | 0 | 4 | 4 | 4 |
| | | | | | | | | |
| Entformkraft N | 5710 | 2840 | 2510 | 2308 | 3585 | 2672 | 2483 | 1690 |

Die Matrix in den Beispielen der Tabelle 5 besteht aus PAMACM12 bzw. einem aromatischem Copolyamid des Typs MACMI/12 . Von den verschiedenen Gleitmitteln in den jeweiligen Masterbatches zeigt das Gleitmittel aus Beispiel 39 und 43 das beste Verhalten in Bezug auf die Entformkraft.

Es versteht sich von selbst, dass sich die obigen erfindungsgemäßen Ergebnisse auch auf die Materialien PMMA und PC zwanglos übertragen lassen.

## Patentansprüche

1. Werkstoffverbunde aus einem Formteil aus mindestens einer transparenten oder transluzenten, einfärbbaren Polyamidformmasse, das mit wenigstens einer transparenten oder transluzenten Oberflächenschicht und/oder mit Dekorfolien, Funktionsfolien oder Lacken oder Kautschuken oder anderen Kunststoffen verbunden ist, **dadurch gekennzeichnet, dass** die zur Herstellung des Formteils, der Oberflächenschicht oder den anderen Kunststoffen verwendete Polyamidformmasse 0,01 bis 5,0 Gew.-%, bevorzugt von 0,01 bis 2,0 Gew.-%, jeweils bezogen auf das Gesamtgewicht der Formmasse, mindestens ein Gleitmittel aus der Gruppe, ausgewählt aus Sorbitanestern, Sebazinsäurestern, Dodekandisäureestern, Behensäurestern, Glycerin, Glykol, Diethylenglykol, Stearoylamid, Stearylstearat, Ethylenbissteroylamid, n-Octyl-Pyrrolidon und der Gruppe der unpolaren Paraffinöle und der Tetracosane, enthält, und eine dauerhafte Haftung zu den anderen Kunststoffschichten und/oder Folien oder Lacken oder Kautschuken oder den anderen Kunststoffen erzielt wird.

2. Werkstoffverbunde gemäß Anspruch 1 **dadurch gekennzeichnet, dass** das Gleitmittel mindestens einen Kohlenwasserstoff mit Tetracosan-Grundstruktur und niedermolekulare Paraffine enthält.

3. Werkstoffverbunde gemäß Anspruch 2, **dadurch gekennzeichnet, dass** das verwendete Tetracosan ein 2,6,10,15,19,23-Hexamethylentetracosan und/oder dessen Isomere ist.

4. Werkstoffverbunde gemäß einem der Ansprüche 1 bis 3, **dadurch gekennzeichnet, dass** die Formmasse zur Herstellung der transparenten Oberflächenschicht und/oder der anderen Kunststoffe aus Polymethylmethacrylat, Polycarbonat, Diethylen-Glykol-Diallyl-Carbonat (CR 39), Polystryrol, Polyethylenterephthalat, Polybutylenterephthalat, PEN, und deren Copolymere, Polyamid, Copolyamid, Polyethersulfon, Poly(aryl)etherketon, Polyimid, Polyurethan, Polyacetal, Polyamidimid, Polyetherketon, Polyetherimide, Polyphenylenoxid, Polyoxymethylen, Acrylnitril/Butadien/Styrol-Polymer, oder Gemische daraus, besteht.

5. Werkstoffverbunde gemäß einem der Ansprüche 1 bis 4, **dadurch gekennzeichnet, dass** das wenigstens eine Gleitmittel bei der Polymerisation oder der Polykondensation der Polyamidformmasse zugegeben wird, als Masterbatch compoundiert oder auf das aus den Polyamidformmassen hergestellte Granulat aufgebracht und/oder zur Dispergierung von Farbpigmenten verwendet wird.

6. Werkstoffverbunde gemäß irgendeinem oder mehreren der Ansprüche 1 bis 5, **dadurch gekennzeichnet, dass** die Polyamidformmassen der transparenten oder transluzenten Oberflächenschicht solche sind, die aus Lactamen, ω-Aminocarbonsäuren und/oder Dicarbonsäuren mit entsprechenden Mengen an Diaminen bestehen, wobei die Gerüste der einzelnen Momomere aus der Gruppe der Aliphaten, Cycloaliphaten oder Aromaten hergeleitet sind, die weitere Substituenten oder Verzweigungen aufweisen können.

7. Werkstoffverbunde gemäß irgendeinem der vorhergehenden Ansprüche 1 bis 6, **dadurch gekennzeichnet, dass** die Formteile nach dem Spritzgießverfahren oder Spritzprägeverfahren, Spritzblasverfahren, Spritz-Streck-Blasverfahren oder Extrusionsverfahren, Folienkaschierverfahren oder einem Spritzguss-Sonderverfahren herstellbar sind.

8. Werkstoffverbunde gemäß irgendeinem der vorhergehenden Ansprüche 1 bis 7, **dadurch gekennzeichnet, dass** sie durch inmold labeling, inmold decoration, Folienhinterspritzen, Verbundspritzgiessen, Kaschieren, Bedampfen, Bedrucken, Kleben, Färben oder Lackieren, Verschweissen veredelt werden und dauerhaft mit anderen Komponenten verbunden werden.

9. Werkstoffverbunde gemäß Anspruch 8, **dadurch gekennzeichnet, dass** sie lackiert werden und besonders bevorzugt dass, Hardcoats oder einfärbbare Hardcoats, die mit oder ohne Primerschicht, aus Lösung auf das Formteil, hergestellt durch thermoplastische Formgebungsverfahren oder durch Formgebungsverfahren für reaktive Gussmassen, wie für Polyurethan-Gussmassen, aufgezogen und ausgehärtet werden.

10. Werkstoffverbunde gemäß Anspruch 8 oder 9, **dadurch gekennzeichnet, dass** Bedampfungsmethoden (Sputtering) zum Aufbringen von Schichten auf diese Formteile, wo eine Silizium-Hartschicht oder eine Tönung durch Verdampfen von Metallen mit oder ohne Vorbereitung durch Plasmabehandlung erzeugt wird, angewendet werden.

11. Werkstoffverbunde gemäß irgendeinem der vorhergehenden Ansprüche 8 oder 10, **dadurch gekennzeichnet, dass** sie für optische Bauteile wie ophthalmische Linsen oder Sonnenlinsen für Brillen, Lupen, Linsensysteme, Mikroskope, Kameras, Displays für Handys, Kameralinsen, Messinstrumente, Uhrengläser oder Uhrengehäuse, Gehäuse für tragbare Telefone mit oder ohne integrierten Displays oder Apparate jeder Art und für CD's, DVD's, Linsen für LED's, Lichtwellenleiter, Lichtkoppler, -Verstärker, Verteiler und Scheiben für Lampen und Lasergeräte, Verbundfolien, Verbundbehälter, und transparente Verbunde aller Art eingesetzt werden.

12. Werkstoffverbunde gemäß irgendeinem der vorhergehenden Ansprüche 8 bis 10, **dadurch gekennzeichnet, dass** die aufgebrachten Lacke die Farbe und/oder eine Antireflexschicht und/oder einen UV-Schutz und/oder photochrome- und/oder thermochrome- und/oder Antifogging- und/oder wasserabweisende und/oder kratzfeste Funktionen enthalten.

13. Werkstoffverbunde gemäß irgendeinem der vorhergehenden Ansprüche 1 bis 12, **dadurch gekennzeichnet, dass** die anderen Kunststoffe aus transparenten Kunststoffen bestehen, die Gleitmittel enthalten, und mit Dekorfolien, Funktionsfolien wie beispielsweise Polarisationsfolien, Hartlackfolien, Filterfolien, oder Lacken, oder Kautschuken, oder anderen Kunststoffen verbunden oder verklebt werden.

14. Werkstoffverbunde gemäß irgendeinem der vorhergehenden Ansprüche 1 bis 13, **dadurch gekennzeichnet, dass** die Polyamide der Formmassen durch die folgenden Ketten der Formel (0) dargestellt sind:
-(NH-R₁-CO)x-(NH-R₂-NH)y-(CO-R₃-CO)y- (Formel (0))
worin:
x, y: 0-100 Mol% bedeuten und die Reste R₁, R₂, R₃ jeweils gleich oder verschieden sein können und aus linear aliphatischen oder verzweigten Ketten mit 2 bis 18 (CH₂)-Einheiten oder aus Ketten mit cycloaliphatischen Kernen, dialkylcycloaliphatischen Kernen, alkylierten-cycloaliphatischen Kernen, ortho-, meta-, para-, aromatischen Kernen, ortho-, meta-, para-, dialkyl-aromatischen Kernen oder Mischungen daraus, bestehen, wobei die aromatischen oder cycloaliphatischen Kerne ein- oder mehrkernig sein können, direkt oder indirekt oder über linear oder verzweigte Alkylgruppen verbunden sein können.

15. Werkstoffverbunde gemäß Anspruch 14, **dadurch gekennzeichnet, dass** sich die Polyamidzusammensetzungen für die Polyamidformmassen aus einem oder mehreren Komponenten der Polyamide mit der Formel (0) und einem oder mehreren Komponenten aus teilkristallinen Polyamiden, Copolyamiden, oder Block-Copolyamiden zusammensetzen.

16. Werkstoffverbunde gemäß Anspruch 14, **dadurch gekennzeichnet, dass** die Polyamidzusammensetzungen für die Polyamidformmassen aus einem oder mehreren Komponenten der Polyamide mit der Formel (0) und mit einem oder mehren Komponenten aus der Gruppe aus Schlagzähmodifikatoren wie gepfropfte, Kern-Mantel-Polymere, Schlagzähmodifikatoren wie SBR, SBS, EPS, EPR, SEBS, EMP, EPDM, Maleinsäureanhydrid, gepfropfte Polyethylene, Propylen, Terpolymere aus Ethylen-Glycidyl-Methacrylat, und der Gruppe der Fremdpolymere oder der Gruppe der thermotropen- oder thermochromen Additive, die temperaturabhängig oder unabhängig von der Wellenlänge des eingestrahlten Lichtes den Farbton ändern und weitere Verarbeitungshilfsstoffe oder der Gruppe der Verstärkungstoffe wie Glasfasern oder Kugeln oder der Mittel mit Antibeschlagausrüstung, zusammensetzten.

17. Werkstoffverbunde gemäß irgendeinem der Ansprüche 14 bis 16, **dadurch gekennzeichnet, dass** die Polyamide der Formmassen aufgebaut sind aus:
A. 100 Mol% einer Diaminmischung mit 10-70 Mol% PACM [Bis-(4-amino-cyclohexyl)-methan] mit weniger als 50 Gew.-% trans,trans-Isomeren und 90-30 Mol% MACM [Bis-(4-amino-3-methyl-cyclohexyl)-methan], wobei gegebenenfalls 0-10 Mol% durch andere aliphatische Diamine mit 6 bis 12 C-Atomen, cycloaliphatische, alkylsubstituierte cycloaliphatische, verzweigte aliphatische Diamine oder Multiamine mit 3 bis 12 Aminogruppen oder deren Mischung, ersetzt sein können, und
B. 100 Mol% langkettigen aliphatischen Dicarbonsäuren mit 8 bis 14 C-Atomen oder Mischungen dieser Dicarbonsäuren, wobei 0-100 Mol% durch andere aromatische oder cycloaliphatische Dicarbonsäuren mit 8 bis 16 C-Atomen ersetzt sein können, die insbesondere ausgewählt sind aus der Gruppe, bestehend aus Isophthalsäure, Terephthalsäure, Naphthalindicarbonsäure, Cyclohexandicarbonsäure oder deren Mischungen, und
wobei 0-100 Mol% der anderen langkettigen aliphatischen Diamine und 0-100 Mol% der anderen langkettigen aliphatischen Dicarbonsäuren wahlweise als 0-20 Mol% ω-Aminocarbonsäuren mit 6 bis 12 C-Atomen oder Lactamen mit 6 bis 12 C-Atomen zugegeben werden können.

18. Werkstoffverbunde gemäß Anspruch 17, **dadurch gekennzeichnet, dass** die Polyamide aufgebaut sind aus:
A. 100 Mol% einer Diaminmischung mit 30-70 Mol% PACM [Bis-(4-aminocyclohexyl)-methan] mit weniger als 50 Gew.% trans,trans-Isomeren und 70-30 Mol% MACM [Bis-(4-amino-3-methyl-cyclohexyl)-methan] und
B. 100 Mol% Dodecandisäure (DDS) oder Sebazinsäure (SS) oder Azelainsäure (AS) oder deren Mischungen.

19. Werkstoffverbunde gemäß Anspruch 17 oder 18, **dadurch gekennzeichnet, dass** die Polyamide aufgebaut sind aus:
A. 100 Mol% einer Diaminmischung mit 40-70 Mol% PACM [Bis-(4-aminocyclohexyl)-methan] mit weniger als 50 Gew.% trans,trans-Isomeren und 60-30 Mol% MACM [Bis-(4-amino-3-methyl-cyclohexyl)-methan] und
B. 100 Mol% Dodecandisäure.

20. Werkstoffverbunde gemäß irgendeinem der Ansprüche 17 bis 19, **dadurch gekennzeichnet, dass** die Polyamide aufgebaut sind aus:
A. 100 Mol% einer Diaminmischung mit 50-70 Mol% PACM [Bis-(4-aminocyclohexyl)-methan] mit weniger als 50 Gew.% trans,trans Isomeren und 50-30 Mol% MACM [Bis-(4-amino-3-methyl-cyclohexyl)-methan] und
B. 100 Mol% Dodecandisäure.

21. Werkstoffverbunde gemäß irgendeinem der Ansprüche 1 bis 13, **dadurch gekennzeichnet, dass** die Polyamide der Formmassen solche auf Basis von Copolyamiden sind, insbesondere mit einem Brechungsindex n_{D}²⁰ von größer 1,59, besonders bevorzugt von größer 1,6, mit einem überwiegenden Gewichtsanteil an Diaminen und Dicarbonsäuren mit aromatischen Kernen, **gekennzeichnet durch** die folgenden Ketten, dargestellt **durch** die Formel (A):
-{IPS-NH-R₁-NH}ₙ₁-{TPS-NH-R₂-NH}ₙ₂-{CO-R₃-NH}ₙ₃- (A)
worin:
n₁ = 40 bis 100 Gew.%-Anteile,
n₂ = 60 bis 0 Gew.%-Anteile,
n₃ = 0 bis 30 Gew.%-Anteile bedeuten und wobei sich die Gew.%-Anteile n₁, n₂ und n₃ auf 100 Gew.% ergänzen,
wobei die Diamine mit den Kernen R₁, R₂ gleich oder verschieden sein können und mindestens zu 30 Mol%, bezogen auf 100 Mol% Diamin, aus para-Xylylen- oder meta-Xylylen-Einheiten bestehen und aus linear aliphatischen oder verzweigten Ketten mit 2 bis 12 (CH₂)-Einheiten oder aus Ketten mit cycloaliphatischen Kernen bestehen, die einzeln oder als Mischungen eingesetzt werden und wobei 100 Mol% der Dicarbonsäuren aus mindestens 40 Mol% Isophthalsäure (IPS) und als Rest aus Terephthalsäure (TPS) bestehen, die vollständig oder teilweise **durch** Naphthalindicarbonsäuren ersetzt sein kann, wobei bis zu 30 Gew.% der Copolyamide der Formmassen **durch** Aminosäuren oder Lactame mit Kern R₃, bestehend aus 5 bis 11 (CH₂)-Ketten, ersetzt sein können.

22. Werkstoffverbunde gemäß Anspruch 21, **dadurch gekennzeichnet, dass** die Copolyamide die Zusammensetzung gemäß Formel (B) aufweisen:
MXDI/MXDT/6I/6T , (B)
mit folgenden Mol%-Anteilen der jeweiligen Komponenten:
20 bis 100 Mol% meta-Xylylendiamin (MXD),
80 bis 0 Mol% Hexamethylendiamin (6),
50 bis 100 Mol% Isophthalsäure (I) und
50 bis 0 Mol% Terephthalsäure (T), bezogen auf 100 Mol% Diamin und 100 Mol% Dicarbonsäuren, wobei meta-Xylylendiamin ganz oder teilweise durch para-Xylylendiamin ersetzt sein kann und Terephthalsäure ganz oder teilweise durch Naphthalindicarbonsäure ersetzt sein kann, wobei symmetrische oder bevorzugt asymmetrische Isomere oder Mischungen davon eingesetzt werden können.

23. Werkstoffverbunde gemäß Anspruch 22, **dadurch gekennzeichnet, dass** die Copolyamide die Zusammensetzung gemäß Formel (B) aufweisen:
MXDI/MXDT/6I/6T , (B)
mit folgenden Mol%-Anteilen der jeweiligen Komponenten:
20 bis 80 Mol% meta-Xylylendiamin (MXD),
80 bis 20 Mol% Hexamethylendiamin (6),
60 bis 80 Mol% Isophthalsäure (I) und
40 bis 20 Mol% Terephthalsäure (T), bezogen auf 100 Mol% Diamin und 100 Mol% Dicarbonsäuren.

24. Werkstoffverbunde gemäß Anspruch 22, **dadurch gekennzeichnet, dass** die Copolyamide die Zusammensetzung gemäß Formel (C) aufweisen:
6I/6T/6NDC, (C)
mit folgenden Mol%-Anteilen der jeweiligen Komponenten:
20 bis 80 Mol% Naphthalindicarbonsäure (NDC), mit symmetrischer oder asymmetrischer Substituentenstellung oder Mischungen davon, insbesondere 2,6-Naphthalincarbonsäure,
80 bis 20 Mol% Isophthalsäure (I),
40 bis 0 Mol% Terephthalsäure (T) und
100 Mol% Hexamethylendiamin (6), das ganz oder teilweise durch Ethylendiamin, Trimethylhexamethylendiamin, oder linearen Diaminen mit 8 bis 12 CH₂-Gruppen, oder cycloaliphatischen Diaminen wie Norbornandiamin, 4,4,-Diaminodicyclohexylmethan, 3,3,-Dimethyl-4,4,-Diaminodicyclohexylmethan oder Mischungen davon, ersetzt sein kann, bezogen auf 100 Mol% Diamin und 100 Mol% Dicarbonsäuren.

25. Werkstoffverbunde gemäß irgendeinem der Ansprüche 1 bis 13, **dadurch gekennzeichnet, dass** die Polyamide der Polyamidformmassen Polyamidblends sind aus einem Polyamid mit der Zusammensetzung gemäß Formel (I) und mindestens einem teilkristallinen Polyamid gemäß der Zusammensetzung der Formel (II), wobei die Anteile des Polyamids (I) und des Polyamids (II) im Verhältnis 99:1 bis 1:99 eingesetzt werden, bevorzugt 10:90 bis 90:10, so dass die Summe gleich 100 Teile ist, wobei das Polyamid (I) die folgende Monomerzusammensetzung hat, beziehungsweise durch die Ketten mit den folgenden Formeln Ia oder Ib dargestellt wird:
⁅(̵OOC-X-COO)̵ₐ(̵HN-Y-NH)̵ₐ(̵OOC-Z-NH)̵_{b}⁆_{c} **(Ia) ,**
⁅(̵OOC-X₁-COO)ₐ₁(HN-Y₁-NH)ₐ₁(OOC-Z₁-NH)_{b1}]_{c1} **(Ib) ,**
worin,
X = meta-Phenyl, para-Phenyl, (CH₂): 4 bis 12 CH₂-Einheiten, Cyclohexyl, Naphtyl, Norbornyl, Norbornandimethyl, Trimethyl-hexamethylen,
X₁ = meta-Phenyl, para-Phenyl, (CH₂): 2 bis 12 CH₂-Einheiten, Cyclohexyl, Naphtyl, Norbornyl, Norbornandimethyl, Trimethyl-hexamethylen,
Y = (CH₂): 2 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norborndimethyl, Trimethyl-hexamethylen, Bis-(cyclohexyl)-methan, Bis-(cyclohexyl)-ethan, Bis-(cyclohexyl)-propan,
Y₁ = (CH₂): 2 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornandimethyl, Trimethyl-hexamethylen, Bis-(cyclohexyl)-methan, Bis-(cyclohexyl)-ethan, Bis-(cyclohexyl)-propan,
Z = (CH₂): 4 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornyldimethyl,
Z₁ = (CH₂): 4 bis 12 CH₂-Einheiten, Cyclohexyl, Bis-(methyl-cyclohexyl)-methan, Bis-(methyl-cyclohexyl)-ethan, Bis-(methyl-cyclohexyl)-propan, Norbornyl, Norbornandimethyl, Trimethyl-hexamethylen,
bedeuten und
a = 0 - 50 mol%, b = 0 - 100 mol%, a₁ = 0 - 50 mol%, b₁ = 0 - 100 mol%
und
die Summe a+a₁+b+b₁ 100 mol%, ergibt die Summe c + c₁ 100 Gew.% ergeben,
- und das teilkristalline Polyamid (II), durch Ketten mit den Formeln IIa und/oder IIb dargestellt wird:
⁅(̵(HN-u-COO)_{d}(HN-v-COO)ₑ(HN-s-NH)_{f}(OOC-t-COO)_{f}]_{g} **(IIa) ,**
⁅(̵HN-s₁-NH)_{f1}(OOC-t₁-COO)_{f1}]_{g1} **(IIb) ,**
worin:
u = (CH₂): 4 bis 12 CH₂-Einheiten, v= (CH₂): 4 bis 12 CH₂-Einheiten,
s,s₁= (CH₂): 2 bis 12 CH₂-Einheiten, meta-Phenyl, para-Phenyl,
t,t₁ = (CH₂): 2 bis 12 CH₂-Einheiten, meta-Phenyl, para-Phenyl,
bedeuten und
f = 0 - 50 mol%, d = 0 - 100 mol%
f₁= 0 - 50 mol%, e = 0 - 100 mol%,
wobei die Summe f+f₁+d+e 100 mol% und
die Summe g+g₁ 100 Gew.% ergibt
und
- mindestens 0,01 bis 2,0 Gew.-Teile, bezogen auf 100 Gew.-Teile der Polyamide der Formeln Ia/Ib, IIa/IIb, einer Phosphorverbindung, die in reiner Form oder als wässerige Lösung eingesetzt werden kann, gemäß Formel III:
[X(R')ₙP(O)l(OR")ₘ] **(III) ,**
worin bedeuten:
X= H, -OR", 2-pyridyl, -NH₂, -NHR', -NR'R", wobei X an (R') oder direkt an P gebunden sein kann,
R' = (CH₂)ₙ₁ linear oder verzweigt ist,
R"= Li, Na, K, H, (CH₂)ₙ₂ linear oder verzweigt ist
und
n = ganze Zahl von 0 bis 5; 1= 0, 1, 1,5, 2, 2,5; m = ganze Zahl von 0 bis 3, n₁ = ganze Zahl von 1 bis 12, n₂ = 1 bis 12 sind,
und/oder
- 0,01 bis 15 Gew.-Teile, bezogen auf 100 Gew.-Teile der Polyamide der Formeln Ia/Ib, IIa/IIb, von cyclischen Phosphonsäureanhydrid-Verbindungen gemäß Formel (IV), die in reiner Form oder als wässerige Lösung eingesetzt werden können:
⁅(R)PO(O)-]ₙ **(IV) ,**
worin
n = 3, 4, 5, 6, ist alternierender -P-O- Heterocyclus mit 3, 4, 5, 6 (P-O) Einheiten im Ring,
R = CH₃, C₂H₅, C₃H₇, C₄H₉, Isobutyl, 2,2,6,6-tetramethyl-4-piperidyl bedeuten.

26. Werkstoffverbunde gemäß Anspruch 25, enthaltend 10 bis 90 Gew.-% eines Polyamids (I) und 90 bis 10 Gew.-% eines teilkristallinen Polyamids (II).

## Claims

1. Composite materials of a molded part made of at least one transparent or translucent, dyeable polyamide molding material, which is connected to at least one transparent or translucent surface layer and/or decorative foils, functional foils or lacquers or rubbers or other plastics, **characterized in that** the polyamide material, which is used to make the molded part, the surface layer the other plastics, includes 0.01 to 5.0 wt.-%, preferably 0.01 to 2.0 wt.-%, in each case based on the total weight of the molding material, of at least one lubricant selected from the group, consisting of sorbitan esters, sebacinc acid esters, dodecanic diacid esters, behenic acid esters, glycerol, glycol, diethylene glycol, stearoyl amide, stearyl stearate, ethylene bissteroyl amide, n-octyl-pyrrolidone and the group of the unpolar paraffinic oils and the tetracosanes, and a permanent adhesion to the other plastic layers and/or foils or lacquers or rubbers or the other plastics is achived.

2. Composite materials according to claim 1, **characterized in that** the lubricant includes at least one hydrocarbon with tetracosane basic structure and low-molecular paraffines.

3. Composite materials according to claim 2, **characterized in that** the used tetracosane is a 2,6,10,15,19,23-hexamethylene-tetracosane and/or its isomers.

4. Composite materials according to one of the claims 1 to 3, **characterized in that** the molding material for making the transparent surface layer and/or the other plastics consist of polymethylmethacrylate, polycarbonate, diethylene glycol diallyl carbonate (CR 39), polystryrene, polyethylene terephthalat, polybutylene terephthalat, PEN, and its copolymers, polyamide, copolyamide, polyethersulfone, poly(aryl)etherketone, polyimide, polyurethane, polyacetal, polyamide imide, polyether ketone, polyether imide, polyphenylen oxide, polyoxymethylene, acrylnitrile/butadiene/styrene polymer, or mixtures thereof.

5. Composite materials according to one of the claims 1 to 4, **characterized in that** the at least one lubricant is added during the polymerization or the polycondensation of the polyamide molding material, is compounded as masterbatch or is applied to the granulate made from the polyamide molding materials and/or is used fort the dispersion of dye pigments.

6. Composite materials according to one or more of the claims 1 to 5, **characterized in that** the polyamide molding materials of the transparent or translucent surface layer consist of lactams, ω-aminocarboxyclic acids and/or dicarboxylic acids with corresponding amounts of diamines, wherein the skeleton of the individual momomers are derived from the group of the aliphatics, cycloaliphatics or aromatics, which can have further substituents or branches.

7. Composite materials according to one of the claims 1 to 6, **characterized in that** the molding materials are producible by an injection molding process or injection stamping process, injection blow process, injection stretch blow process or extrusion process, foil lamination process or a injection molding special process.

8. Composite materials according to one of the claims 1 to 7, **characterized in that** they are refined by inmold labeling, inmold decoration, foil insert molding, composite injection molding, lamination, sputtering, imprinting, gluing, dying or varnishing, welding and permanently connected to other components.

9. Composite materials according to claim 8, **characterized in that** they are are varnished and especially preferred that, hardcoats or dyable hardcoats, with or without primer layer, are applied from solution to the molded part, made by thermoplastic forming processes or by forming processes for reactive founding materials, such as for polyurethane founding materials, and hardened.

10. Composite materials according to claim 8 or 9, **characterized in that** sputtering for applying layers to these molded parts is applied, wherein a silicon hardcoat or a tinting is produced by evaporation of metals with or without pretreatment by plasma conditioning.

11. Composite materials according to anyone of the previous claims 8 or 10, **characterized in that** they are used for optical components as ophthalmic lenses or sun lenses for eyeglasses, magnifying glasses, lens systems, microscopes, cameras, displays for cellular phones, lenses for cameras, measuring devices, watch-glasses or watchcases, cases for handheld telephones with or without integrated displays, or any kind of devices, and for CD's, DVD's, lenses for LED's, beam waveguides, light couplers, light amplifiers, distributors and panes for lamps and laser devices, multilayer foils, composite containers, and any kinds of transparent composites.

12. Composite materials according to anyone of the previous claims 8 or 10, **characterized in that** the applied lacquers include the dye and/or an antireflex layer and/or an UV protection and/or photochrome and/or thermochrome and/or antifogging and/or water-repellent and/or scratch-resistant functions.

13. Composite materials according to anyone of the previous claims 1 to 12, **characterized in that** the other plastics consist of transparent plastics, which include lubricants, and which are connected or agglutinated to decorative foils, functional films such as polarization foils, hard lacquer foils, filter foils, or lacquers, or rubbers, or other plastics.

14. Composite materials according to anyone of the previous claims 1 or 13, **characterized in that** the polyamides of the molding materials are represented by the following chains of formula (0):
-(NH-R₁-CO)x-(NH-R₂-NH)y-(CO-R₃-CO)y- (formula (0))
wherein:
x, y: 0-100 mol% and the groups R₁, R₂, R₃ can be similar or different, respectively, and consist of linear aliphatic or branched chains with 2 to 18 (CH₂)-units or of chains with cycloaliphatic cores, dialkyl cycloaliphatic cores, alkylated cycloaliphatic cores, ortho-, meta-, para- aromatic cores, ortho-, meta-, para- dialkyl aromatic cores or mixtures thereof, wherein the aromatic or cycloaliphatic cores can be mononuclear or polynuclear, connected directly or indirectly or via linear or branched alkyl groups.

15. Composite materials according to claim 14, **characterized in that** the polyamide compositions for the polyamide molding materials consist of one or more components of the polyamides with the formula (0) and one or more components of partly crystalline polyamides, copolyamides, or block copolyamides.

16. Composite materials according to claim 14, **characterized in that** the polyamide compositions for the polyamide molding materials consist of one or more components of the polyamides with the formula (0) and one or more components of the group, consisting of impact modifiers, such as grafted, core-shell-polymers, impact modifiers, such as SBR, SBS, EPS, EPR, SEBS, EMP, EPDM, maleic acid anhydride, grafted polyethylene, propylene, terpolymers of ethylene glycidyl methacrylat, and the group of the foreign polymers or the group of the thermotropic or thermochromic additives, which change their coloring depending on temperature or on the wavelength of the radiated light and further processing adjuvants or the group of the reinforcing agents, such as glass balls or balls or the agents with antifogging equipment.

17. Composite materials according to any of the claims 14 to 16, **characterized in that** the polyamides of the molding materials are synthesized from:
A. 100 mol% of a diamine mixture with 10-70 mol% PACM [bis-(4-amino-cyclohexyl)-methane] with less than 50 wt.-% trans,trans-isomers and 90-30 mol% MACM [Bis-(4-amino-3-methyl-cyclohexyl)-methane], wherein optionally 0-10 mol% can be replaced by other aliphatic diamines with 6 to 12 C-atoms, cycloaliphatic, alkylsubstituted cycloaliphatic, branched aliphatic diamines or multiamines with 3 to 12 aminogroups or its mixtures, and
B. 100 mol% long-chain aliphatic dicarboxylic acids with 8 to 14 C-atoms or mixtures of these dicarboxylic acids, wherein 0-100 mol% can be replaced by other aromatic or cycloaliphatic dicarboxylic acids with 8 to 16 C-atoms, which are especially selescted from the group, consisting of isophthalic acid, terephthalic acid, naphthalene dicarboxylic acid, cyclohexane dicarboxylic acid or its mixtures, and
wherein 0-100 mol% of the other long chain aliphatic diamine and 0-100 mol% of the other long-chain aliphatic dicarboxylic acid can be added either as 0-20 mol% ω-amino carboxylic acid with 6 to 12 C-atoms or as lactams with 6 to 12 C-atoms.

18. Composite materials according to claim 17, **characterized in that** the polyamides are synthesized from:
A. 100 mol% of a diamine mixture with 30-70 mol% PACM [bis-(4-amino-cyclohexyl)-methane] with less than 50 wt.% trans,trans-isomers and 70-30 mol% MACM [bis-(4-amino-3-methyl-cyclohexyl)-methane] and
B. 100 mol% dodecanic diacid (DDS) or sebacic acid (SS) or azelaic acid (AS) or ist mixtures.

19. Composite materials according to claim 17 or 18, **characterized in that** the polyamides are synthesized from:
A. 100 mol% of a diamine mixture with 40-70 mol% PACM [bis-(4-aminocyclohexyl)-methan] with less than 50 wt.% trans,trans-isomers and 60-30 Mol% MACM [Bis-(4-amino-3-methyl-cyclohexyl)-methane] and
B. 100 mol% dodecanic diacid.

20. Composite material according to any of the claims 17 to 19, **characterized in that** the polyamides are synthesized from:
A. 100 mol% of a diamine mixture with 50-70 mol% PACM [bis-(4-amino-cyclohexyl)-methane] with less than 50 wt.% trans,trans-isomers and 50-30 mol% MACM [bis-(4-amino-3-methyl-cyclohexyl)-methane] and
B. 100 mol% dodecanic diacid.

21. Composite material according to any of the claims 1 to 13, **characterized in that** the polyamides of the molding materials are such based on copolyamides, especially with a refractive index n_{D}²⁰ of more then 1.59, especially preferred of more then 1.6, with a predominant weight proportion of diamines and dicarboxylic acids with aromatic cores, **characterized by** the following chains, represented by formula (A):
-{IPS-NH-R₁-NH}ₙ₁-{TPS-NH-R₂-NH}ₙ₂-{CO-R₃-NH}ₙ₃- (A)
wherein:
n₁ = 40 to 100 wt.%-parts,
n₂ = 60 to 0 wt.%-parts,
n₃ = 0 to 30 wt.%-parts and wherein the wt.%-parts n₁, n₂ und n₃ add to 100 wt.%,
wherein the diamines with the cores R₁, R₂ can be similar or different and consist at least by 30 mol%, referred to 100 mol% diamine, of para-xylylene- or meta-xylylene-units and of linear aliphatic or branched chains with 2 to 12 (CH₂)-units or of chains with cycloaliphatic cores, which are applied individually or as mixtures and wherein 100 mol% of the dicarboxylic acids consist of at least 40 mol% isophthalic acid (IPS) and the balance of terephthalic acid (TPS), which can be completely or partially replaced by naphthalene dicarboxylic acids, wherein up to 30 wt.% of the copolyamides of the molding materials can be replaced by amino acids or lactams with core R₃, consisting of 5 to 11 (CH₂)-chains.

22. Composite material according to claim 21, **characterized in that** the copolyamides are defined according to formula (B):
MXDI/MXDT/6I/6T , (B)
with the following mol%-parts of the respective components:
20 to 100 mol% meta-xylylene diamine (MXD),
80 to 0 mol% hexamethylene diamine (6),
50 to 100 mol% isophthalic acid (I) and
50 to 0 mol% terephthalic acid (T), referred to 100 mol% diamine and 100 mol% dicarboxylic acids, wherein meta-xylylene diamine can be completely or partially replaced by para-xylylene diamine and terephthalic acid can be completely or partially replaced by naphthalene dicarbonxylic acid, wherein symmetric or preferably asymmetric isomers or mixtures thereof can be used.

23. Composite material according to claim 22, **characterized in that** the copolyamides have the composition according to formula (B):
MXDI/MXDT/6I/6T , (B)
with the following mol%-proportions of the respective components:
20 to 80 mol% meta-xylylene diamine (MXD),
80 to 20 mol% hexamethylene diamine (6),
60 to 80 mol% isophthalic acid (I) and
40 to 20 mol% terephthalic acid (T), referred to 100 mol% diamine and 100 mol% dicarboxylic acids.

24. Composite materials according to claim 22, **characterized in that** the copolyamides have the composition according to formula (C):
6I/6T/6NDC, (C)
with the following mol%-proportions of the respective components:
20 to 80 Mol% naphthalene dicarboxylic acid (NDC), with symmetric or asymmetric substituent configuration or mixtures thereof, especially 2,6-naphthalene carboxylic acids, 80 to 20 mol% isophthalic acid (I),
40 to 0 mol% terephthalic acid (T) and
100 mol% hexamethylene diamine (6), which can be completely or partly replaced by ethylene diamine, trimethylhexamethylene diamine, or linear diamines with 8 to 12 CH₂-groups, or cycloaliphatic diamines, such as norbornane diamine, 4,4',-diamino dicyclohexyl methane, 3,3,-dimethyl-4,4-diamino-dicyclohexyl methane or mixtures thereof, referred to 100 mol% diamine and 100 mol% dicarboxylic acids.

25. Composite materials according to any of the claims 1 to 13, **characterized in that** the polyamides of the polyamide molding materials are polyamide blends of a polyamide with the composition according to formula (I) and at least one partly crystalline polyamide according to the composition of formula (II), wherein the proportions of the polyamide (I) and the polyamide (II) are added in the ratio 99:1 to 1:99, preferably 10:90 to 90:10, so that they sum up to 100 parts, wherein the polyamide (I) has the following monomer composition, and is represented by the chains with the following formula Ia or Ib, respectively:
⁅(̵OOC-X-COO)̵ₐ(̵HN-Y-NH)̵ₐ(̵OOC-Z-NH)̵_{b}⁆_{c} **(Ia) ,**
⁅(̵OOC-X₁-COO)ₐ₁(HN-Y₁-NH)ₐ₁(OOC-Z₁-NH)_{b1}]_{c1} **(Ib) ,**
wherein,
X = meta-phenylene, para-phenylene, (CH₂): 4 to 12 CH₂ units, cyclohexylene, naphtylene, norbornylene, norbornane dimethylene, trimethyl hexamethylene,
X₁ = meta-phenylene, para-phenylene, (CH₂): 2 to 12 CH₂ units, cyclohexylene, naphtylene, norbornylene, norbornan dimethylene, trimethyl hexamethylene,
Y = (CH₂): 2 to 12 CH₂ units, cyclohexylene, bis-(methyl-cyclohexylene) methane, bis-(methyl-cyclohexylene) ethane, bis-(methyl-cyclohexylene) propane, norbornylene, norbornane dimethyle, trimethyl-hexamethylene, bis-(cyclohexylene) methane, bis-(cyclohexylene) ethane, bis-(cyclohexylene)-propane,
Y₁ = (CH₂): 2 to 12 CH₂ units, cyclohexylene, bis-(methyl-cyclohexylene) methane, bis-(methyl-cyclohexylene) ethane, bis-(methyl-cyclohexylene) propane, norbornylene, norbornane dimethyle, trimethyl-hexamethylene, bis-(cyclohexylene) methane, bis-(cyclohexylene) ethane, bis-(cyclohexylene)-propane,
Z = (CH₂): 4 to 12 CH₂ units, cyclohexylene, bis-(methyl-cyclohexylene) methane, bis-(methyl-cyclohexylene) ethane, bis-(methyl-cyclohexylene) propane, norbornylene, norbornane dimethyle,
Z₁ = (CH₂): 4 to 12 CH₂ units, cyclohexylene, bis-(methyl-cyclohexylene) methane, bis-(methyl-cyclohexylene) ethane, bis-(methyl-cyclohexylene) propane, norbornylene, norbornane dimethyle, trimethyl-hexamethylene,
and
a = 0 - 50 mol%, b = 0 - 100 mol%, a₁ = 0 - 50 mol%, b₁ = 0 - 100 mol%
and
the sum a+a₁+b+b₁ is 100 mol%, the sum c + c₁ is 100 Gew.%,
- and the partly crystalline polyamide (II), is represented by chains with the formulas IIa and/or IIb:
⁅(̵HN-u-COO)_{d}(HN-v-COO)ₑ(HN-s-NH)_{f}(OOC-t-COO)_{f}]_{g} **(IIa) ,**
⁅(̵HN-s₁-NH)_{f1}(OOC-t₁-COO)_{f1}]_{g1} **(IIb) ,**
wherein:
u = (CH₂): 4 to 12 CH₂ units, v= (CH₂): 4 to 12 CH₂ units,
s,s₁= (CH₂): 2 to 12 CH₂units, meta-phenylene, para-phenylene,
t,t₁ = (CH₂): 2 to 12 CH₂ units, meta-phenylene, para-phenylene,
and
f = 0 - 50 mol%, d = 0 - 100 mol%
f₁= 0 - 50 mol%, e = 0 - 100 mol%,
wherein the sum f+f₁+d+e is 100 mol% and
the sum g+g₁ is 100 Gew.%
and
- at least 0,01 to 2,0 wt.-parts, referred to 100 wt.-parts of the polyamides of the formulas Ia/Ib, IIa/IIb, of a phosphorus compound, which can be added purely or as an aqueous solution, according to formula III:
[X(R')ₙP(O)l(OR")ₘ] **(III) ,**
wherein:
X= H, -OR", 2-pyridyl, -NH₂, -NHR', -NR'R" , wherein X can be bonded at (R') or directly at P,
R' = (CH₂)ₙ₁ is linear or branched,
R"= Li, Na, K, H, (CH₂)ₙ₂ is linear or branched,
and
n = hole number from 0 to 5; 1 = 0, 1, 1,5, 2, 2,5; m = hole number from 0 to 3, n₁ = hole number from 1 to 12, n₂ = 1 to 12,
and/or
- 0,01 to 15 wt.-parts, referred to 100 wt.-parts of the polyamides of the formulas Ia/Ib, IIa/IIb, of cyclic phosphonic acid anhydride compounds according to formula (IV), which can be added purely or as an aqueous solution:
⁅(R)PO(O)-]ₙ **(IV) ,**
wherein
n = 3, 4, 5, 6, is an alternating -P-O- heterocycle with 3, 4, 5, 6 (P-O) units in the ring,
R = CH₃, C₂H₅, C₃H₇, C₄H₉, isobutyl, 2,2,6,6-tetramethyl-4-piperidyl.

26. Composite materials according to claim 25, including 10 to 90 wt.-% of a polyamide (I) and 90 to 10 wt.-% of a partly crystalline polyamide (II).

## Revendications

1. Matériau composite de pièce moulée, consistant en au moins une masse moulable de polyamide, transparente ou translucide, pouvant être colorée, qui est jointe à au moins une couche de surface transparente ou translucide et/ou des feuilles décoratives, des feuilles fonctionnelles ou des laques ou des caoutchoucs ou d'autres matières plastiques, **caractérisé en ce que** la masse moulable de polyamide utilisée pour la préparation de la pièce moulée, de la couche de surface ou des autres matières plastiques, contient de 0,01 à 5,0% en poids, de préférence 0,01 à 2,0% en poids, chaque fois sur base du poids total de la masse moulable, d'au moins un lubrifiant choisi parmi le groupe consistant en des esters de sorbitan, des esters d'acide sébacique, des esters d'acide dodécanedioïque, des esters d'acide béhénique, la glycérine, un glycol, le diéthylèneglycol, un stéaroylamide, le stéarate de stéaryle, le bis-stéroylamide d'éthylène, la n-octylpyrrolidone et le groupe des huiles de paraffine non polaires et des tétracosanes, et **en ce qu'**une adhérence durable sur d'autres couches et/ou feuilles plastiques ou laques ou caoutchouc ou d'autres matières plastiques est atteinte.

2. Matériau composite selon la revendication 1, **caractérisé en ce que** le lubrifiant contient au moins un hydrocarbure avec structure de base tétracosane et une paraffine de faible poids moléculaire.

3. Matériau composite selon la revendication 2, **caractérisé en ce que** le tétracosane utilisé est un 2,6,10,15,19,23-hexaméthylènetétracosane et/ou ses isomères.

4. Matériau composite selon une des revendications 1 à 3, **caractérisé en ce que** la masse moulable pour la préparation de la couche de surface transparente et/ou des autres matières plastiques consiste en le poly(méthacrylate de méthyle), un polycarbonate, le diéthylèneglycol-carbonate de diallyle (CR 39), un polystyrène, le poly(téréphtalate d'éthylène), le poly(téréphtalate de butylène), le PEN et leurs copolymères, un polyamide, un copolyamide, une polyéthersulfone, une poly(aryl)éthercétone, un polyimide, un polyuréthanne, un polyacétal, un polyamide-imide, une polyéthercétone, un polyétherimide, le poly(oxyde de phénylène), le polyoxyméthylène, le polymère acrylonitrile/butadiène/styrène ou leurs mélanges.

5. Matériau composite selon une des revendications 1 à 4, **caractérisé en ce que** le au moins un lubrifiant est ajouté lors de la polymérisation ou de la polycondensation de la masse moulable de polyamide, ajouté sous forme de mélange maître ou appliqué sur le granulat préparé à partir de la masse moulable de polyamide et/ou utilisé pour la dispersion des pigments colorés.

6. Matériau composite selon une ou plusieurs des revendications 1 à 5, **caractérisé en ce que** les masses moulables de polyamide de la couche de surface transparente ou translucide, sont celles qui consistent en des lactames, des acides ω-aminocarboxyliques et/ou acide dicarboxyliques avec des quantités correspondantes de diamines, où le squelette des monomères individuels dérive du groupe des aliphatiques, cycloaliphatiques ou aromatiques, qui peuvent présenter d'autres substituants ou ramifications.

7. Matériau composite selon une ou plusieurs des revendications 1 à 6, **caractérisé en ce que** les pièces moulées peuvent être préparées par le procédé de moulage par injection ou le procédé d'injection-compression, le procédé d'injection-soufflage, le procédé d'injection-étirage-soufflage ou le procédé d'extrusion, le procédé de laminage de feuilles ou un procédé d'injection-autre.

8. Matériau composite selon une ou plusieurs des revendications 1 à 7, **caractérisé en ce qu'**il est amélioré par marquage inmold, décoration inmold, extrusion de feuille arrière, moulage par injection de composite, laminage, métallisation, impression, collage, coloration ou laquage, soudage et joint avec d'autres composants de manière durable.

9. Matériau composite selon la revendication 8, **caractérisé en ce qu'**il est laqué et de manière particulièrement préférée, **en ce que** des revêtements durs ou revêtements durs pouvant être colorés, qui sont étirés et durcis avec ou sans couche de primaire, à partir d'une solution, sur la pièce moulée, préparée par un procédé de moulage thermoplastique ou par un procédé de moulage pour masse coulée réactive, comme les masses coulées en polyuréthanne.

10. Matériau composite selon la revendication 8 ou 9, **caractérisé en ce que** les procédés de métallisation (pulvérisation) sont utilisés pour l'application de couches sur ces pièces moulées, où une couche dure de silicium ou une teinte est produite par métallisation de métaux avec ou sans prétraitement par plasma.

11. Matériau composite selon une quelconque des revendications 8 ou 10 précédentes, **caractérisé en ce qu'**il est mis en oeuvre pour des éléments optiques comme des lentilles ophtalmiques ou des lentilles solaires pour lunettes, des loupes, des systèmes à lentille, des microscopes, des caméras, des affichages pour téléphones mobiles, les lentilles de caméra, des instruments de mesure, des verres de montre ou des boîtiers de montre, des boîtiers de téléphone portable avec ou sans affichage intégré ou des appareils de tout type et pour des CD, DVD, lentilles pour LED, fibres optiques, connexions pour lumière, amplificateurs de lumière, distributeurs et disques pour lampes et appareils laser, feuilles composites, réservoir composite et composite transparent de tout type.

12. Matériau composite selon une quelconque des revendications 8 a 10 précédentes, **caractérisé en ce** les laques appliquées contiennent la peinture et/ou une couche anti-réflexion et/ou une protection contre les UV et/ou des fonctions photochromes et/ou thermochromes et/ou anti-buées et/ou hydrofuges et/ou résistantes aux rayures.

13. Matériau composite selon une quelconque des revendications 1 à 12 précédentes, **caractérisé en ce que** les autres matières plastiques consistent en des matières plastiques transparentes, qui contiennent un lubrifiant, et sont jointes ou collées à des feuilles décoratives, des feuilles fonctionnelles, comme par exemple des feuilles de polarisation, des feuilles de laque dure, des feuilles de filtre, ou des laques, ou des caoutchoucs ou d'autres matières plastiques.

14. Matériau composite selon une quelconque des revendications 1 à 13 précédentes, **caractérisé en ce que** le polyamide des masses moulables sont représentés par les chaînes suivantes de formule (O) :
-(NH-R₁-CO)ₓ-(NH-R₂-NH)_{y}-(CO-R₃-CO)_{y}- (formule (0))
où :
x, y représentent 0-100% en moles et les restes R₁, R₂, R₃ peuvent être identiques ou différents et consistent en des chaînes linéaires aliphatiques ou ramifiées avec 2 à 18 unités (CH₂) ou de chaînes avec des coeurs cycloaliphatiques, des coeurs dialkyl-cycloaliphatiques, des coeurs cycloaliphatiques alkylés, des coeurs otho-, méta-, para-aromatiques, des coeurs otho-, méta-, para-dialkylaromatiques ou leurs mélanges, où les coeurs aromatiques ou cycloaliphatiques peuvent être à un ou plusieurs cycles et ils peuvent être liés directement ou indirectement ou par des groupes alkyle linéaires ou ramifiés.

15. Matériau composite selon la revendication 14, **caractérisé en ce que** les compositions de polyamide pour les masses moulables en polyamide se composent d'un ou de plusieurs composants de polyamide avec la formule (0) et un ou plusieurs composants de polyamide partiellement cristallin, copolyamide ou copolyamide séquencé.

16. Matériau composite selon la revendication 14, **caractérisé en ce que** les compositions de polyamide pour les masses moulables en polyamide se composent d'un ou de plusieurs composants de polyamide avec la formule (0) et un ou plusieurs composants du groupes des modificateurs de résilience, comme des polymères coeur-enveloppe greffés, des modificateurs de résilience comme SBR, SBS, EPS, EPR, SEBS, EMP, EPDM, l'anhydride maléique, le polyéthylène greffé, le propylène, des terpolymères d'éthylène-méthacrylate de glycidyle et du groupe des polymères étrangers ou du groupe des additifs thermotropènes ou thermochromes, qui modifient le teinte en fonction de la température ou indépendamment de la longueur d'onde de la lumière irradiée, et d'autres auxiliaires de traitement ou du groupe des substances de renforcement, comme des fibres de verre ou des billes ou de ceux-ci avec équipement anti-buée.

17. Matériau composite selon une quelconque des revendications 14 à 16, **caractérisé en ce que** les polyamides des masses moulables sont élaborés à partir de:
A. 100% en moles d'un mélange de diamines avec 10-70% en moles de PACM [Bis-(4-aminocyclohexyl)méthane] avec moins de 50% en poids d'isomères trans,trans et 90-30% en moles de MACM [Bis-(4-amino-3-méthylcyclohexyl)méthane], où le cas échéant, 0-10% en moles peuvent être remplacés par d'autres diamines aliphatiques avec 6 à 12 atomes C, des diamines cycloaliphatiques, cycloaliphatiques substituées par alkyle, aliphatiques ramifiées ou des multiamines avec 3 à 12 groupes amino ou leur mélange, et
B. 100% en moles d'acides dicarboxyliques aliphatiques à longue chaîne avec 8 à 14 atomes C ou des mélanges de ces acides dicarboxyliques, où 0-100% en moles peuvent être remplacés par d'autres acides dicarboxyliques aromatiques ou cycloaliphatiques avec 8 à 16 atomes C, qui sont choisis en particulier parmi le groupe consistant en l'acide isophtalique, l'acide téréphtalique, l'acide naphtalènedicarboxylique, l'acide cyclohexanedicarboxylique ou leurs mélanges, et où 0-100% en moles des autres diamines aliphatiques à longue chaîne et 0-100% en moles des autres acides dicarboxyliques aliphatiques à longue chaîne peuvent être ajoutés au choix, en tant que 0-20% en moles d'acides ω-aminocarboxyliques avec 6 à 12 atomes C ou de lactames avec 6 à 12 atomes C.

18. Matériau composite selon la revendication 17, **caractérisé en ce que** les polyamides sont élaborés à partir de :
A. 100% en mole d'un mélange de diamines avec 30-70% en moles de PACM [Bis-(4-aminocyclohexyl)méthane] avec moins de 50% en poids d'isomères trans,trans et 70-30% en moles de MACM [Bis-(4-amino-3-méthylcyclohexyl)méthane], et
B. 100% en moles d'acide dodécanedicarboxylique (DDS) ou d'acide sébacique (SS) ou d'acide azélaïque (AS) ou de leurs mélanges.

19. Matériau composite selon la revendication 17 ou 18, **caractérisé en ce que** les polyamides sont élaborés à partir de :
A. 100% en mole d'un mélange de diamines avec 40-70% en moles de PACM [Bis-(4-aminocyclohexyl)méthane] avec moins de 50% en poids d'isomères trans,trans et 60-30% en moles de MACM [Bis-(4-amino-3-méthylcyclohexyl)méthane], et
B. 100% en moles d'acide dodécanedicarboxylique.

20. Matériau composite selon l'une des revendications 17 à 19, **caractérisé en ce que** les polyamides sont élaborés à partir de :
A. 100% en mole d'un mélange de diamines avec 50-70% en moles de PACM [Bis-(4-aminocyclohexyl)méthane] avec moins de 50% en poids d'isomères trans,trans et 50-30% en moles de MACM [Bis-(4-amino-3-méthylcyclohexyl)méthane], et
B. 100% en moles d'acide dodécanedicarboxylique.

21. Matériau composite selon une quelconque des revendications 1 à 13, **caractérisé en ce que** les polyamides des masses moulables sont ceux à base de copolyamides, en particulier avec un indice de réfraction n_{D}²⁰ supérieure à 1,59, de manière particulièrement préférée, supérieur à 1,6, avec une proportion pondérale prédominante de diamines et acides dicarboxyliques avec coeurs aromatiques, **caractérisé par** les chaînes suivantes, représentées par la formule (A) :
- (IPS-NH-R₁-NH)ₙ₁-(TPS-NH-R₂-NH)ₙ₂-(CO-R₃-NH)ₙ₃- (A)
où :
n₁ = 40 à 100% en poids,
n₂ = 60 à 0% en poids,
n₃ = 0 à 30% en poids, et où les parties en poids n₁, n₂ et n₃ se complètent pour faire 100% en poids,
où les diamines avec les coeurs R₁, R₂ peuvent être identiques ou différentes et au moins 30% en moles, sur base de 100% en moles de diamine, consistent en des unités para-xylylène ou méta-xylylène et consistent en des chaînes linéaires aliphatiques ou ramifiées avec 2 à 12 unités (CH₂) ou des chaînes avec des coeurs cycloaliphatiques, qui peuvent être mis en oeuvre seules ou sous forme de mélanges, et où 100% en moles des acides dicarboxyliques consistent en au moins 40% en moles d'acide isophtalique (IPS) et le reste, en acide téréphtalique (TPS), qui peut être remplacé complètement ou partiellement par l'acide naphtalènedicarboxylique, où jusqu'à 30% en poids du copolyamide des masses moulables consistent en des aminoacides ou des lactames avec le coeur R₃, consistant en des chaînes de 5 à 11 (CH₂).

22. Matériau composite selon la revendication 21, **caractérisé en ce que** les copolyamides présentent la composition selon la formule (B) :
MXDI/MXDT/6I/6T (B)
avec les proportions en % en moles suivantes de chaque composant :
20 à 100% en moles de méta-xylylènediamine (MXD),
80 à 0% en moles de hexaméthylènediamine (6),
50 à 100% en moles d'acide isophtalique (I), et
50 à 0% en moles d'acide téréphtalique (T), sur base de 100% en moles de diamine et de 100% en moles d'acide dicarboxyliques, où la méta-xylylènediamine peut être complètement ou partiellement remplacée par la para-xylylènediamine et l'acide téréphtalique peut être complètement ou partiellement remplacé par l'acide naphtalènedicarboxylique, où on peut mettre en oeuvre des isomères symétriques ou de préférence, asymétriques ou des mélanges de ceux-ci.

23. Matériau composite selon la revendication 22, **caractérisé en ce que** les copolyamides présentent la composition selon la formule (B) :
MXDI/MXDT/6I/6T (B)
avec les proportions en % en moles suivantes de chaque composant :
20 à 80% en moles de méta-xylylènediamine (MXD),
80 à 20% en moles de hexaméthylènediamine (6),
60 à 80% en moles d'acide isophtalique (I), et
40 à 20% en moles d'acide téréphtalique (T), sur base de 100% en moles de diamine et de 100% en moles d'acide dicarboxyliques.

24. Matériau composite selon la revendication 22, **caractérisé en ce que** les copolyamides présentent la composition selon la formule (C) :
6I/6T/6NDC (C)
avec les proportions en % en moles suivantes de chaque composant :
20 à 80% en moles d'acide naphtalènedicarboxylique (NDC), avec position symétrique ou asymétrique des substituants ou leurs mélanges, en particulier l'acide 2,6-naphtalènedicarboxylique,
80 à 20% en moles d'acide isophtalique (I),
40 à 0% en moles d'acide téréphtalique (T),
100% en moles de hexaméthylènediamine (6), qui peut être complètement ou partiellement remplacée par l'éthylènediamine, la triméthylhexaméthylènediamine ou des diamines linéaires ayant 8 à 12 groupes CH₂, ou des diamines cyclaliphatiques comme la nobornènediamine, le 4,4'-diaminodicyclohexylméthane, le 3,3-diméthyl-4,4'-diaminodicyclohexylméthane ou leurs mélanges, sur base de 100% en moles de diamine et de 100% en moles d'acide dicarboxyliques.

25. Matériau composite selon une quelconque des revendications 1 à 13, **caractérisé en ce que** les polyamides des masses moulables de polyamide sont des mélanges de polyamides, constitués d'un polyamide avec la composition selon la formule (I) et d'au moins un polyamide partiellement cristallin selon la composition de la formule (II), où les proportions du polyamide (I) et du polyamide (II) sont mises en oeuvre en un rapport de 99:1 à 1:99, de préférence de 10:90 à 90:10, de sorte que Ia somme donne 100 parties, où le polyamide (I) a la composition suivante des monomères, et respectivement, est représenté par les chaînes avec les formules la ou Ib suivantes :
-[(OOC-X-COO)ₐ-(NH-Y-NH)ₐ-(OOC-Z-NH)_{b}]_{c}- (Ia),
-[(OOC-X₁-COO)ₐ₁-(NH-Y₁-NH)ₐ₁-(OOC-Z₁-NH)_{b1}]_{c1}- (Ib),
où :
X = méta-phényle, para-phényle, (CH₂) : 4 à 12 unités CH₂, cyclohexyle, naphtyle, norbornyle, norbornanediméthyle, triméthylhexaméthylène,
X₁ = méta-phényle, para-phényle, (CH₂) : 2 à 12 unités CH₂, cyclohexyle, naphtyle, norbornyle, norbornanediméthyle, triméthylhexaméthylène,
Y = (CH₂) : 2 à 12 unités CH₂, cyclohexyle, bis(méthylcyclohexyl)méthane, bis(méthylcyclohexyl)-éthane, bis(méthylcyclohexyl)propane, norbornyle, norbornanediméthyle, triméthylhexaméthylène, bis(cyclo-hexyl)méthane, bis(cyclohexyl)éthane, bis(cyclohexyl)-propane,
Y₁ = (CH₂) : 2 à 12 unités CH₂, cyclohexyle, bis(méthylcyclohexyl)méthane, bis(méthylcyclohexyl)-éthane, bis(méthylcyclohexyl)propane, norbornyle, norbornanediméthyle, triméthylhexaméthylène, bis(cyclo-hexyl)méthane, bis(cyclohexyl)éthane, bis(cyclohexyl)-propane,
Z = (CH₂) : 4 à 12 unités CH₂, cyclohexyle, bis(méthylcyclohexyl)méthane, bis(méthylcyclohexyl)-éthane, bis(méthylcyclohexyl)propane, norbornyle, norbornanediméthyle,
Z₁ = (CH₂) : 4 à 12 unités CH₂, cyclohexyle, bis(méthylcyclohexyl)méthane, bis(méthylcyclohexyl)-éthane, bis(méthylcyclohexyl)propane, norbornyle, norbornanediméthyle, triméthylhexaméthylène, et
a = 0-50% en moles, b = 0-100% en moles, a₁ = 0-50% en moles, b₁ = 0-100% en moles, et
la somme a+a₁+b+b₁ donne 100% en moles, la somme c+c₁ donne 100% en moles,
et le polyamide (II) partiellement cristallin est représenté par les chaînes avec les formules IIa et/ou IIb :
-[(HN-u-COO)_{d}-(NH-v-COO)ₑ-(HN-s-NH)_{f}-(OOC-t-COO)_{f}]_{g} (IIa),
-[(NH-s₁-NH)_{f1}-(OOC-t₁-COO)_{f1}]_{g1}- (IIb),
où :
u = (CH₂) : 4 à 12 unités CH₂, v = (CH₂) : 4 à 12 unités CH₂,
s, s₁ = (CH₂) : 2 à 12 unités CH₂, méta-phényle, para-phényle,
t, t₁ = (CH₂) : 2 à 12 unités CH₂, méta-phényle, para-phényle,
f = 0-50% en moles, d = 0-100% en moles,
f₁ = 0-50% en moles, e = 0-100% en moles, et
la somme f+f₁+d+e donne 100% en moles, la somme g+g₁ donne 100% en moles, et
au moins 0,01 à 2,0 parties en poids, sur base de 100 parties en poids des polyamides des formules Ia/IB, IIa/IIB, d'un composé du phosphore, qui peut être mis en oeuvre sous une forme pure ou sous forme d'une solution aqueuse, selon la formule III :
[X(R')ₙP(O)ₗ(OR")ₘ] (III)
où
X = H, -OR", 2-pyridyle, -NH₂, -NHR', -NR'R", où X peut être relié sur (R') ou directement sur P,
R' = (CH₂)ₙ₁ linéaire ou ramifié,
R" = Li, Na, K, H, (CH₂)ₙ₂ linéaire ou ramifié, et
n = un nombre entier allant de 0 à 5 ; I = 0, 1, 1,5, 2, 2,5 ; m = un nombre entier allant de 0 à 3 ; n₁ = un nombre entier allant de 1 à 12 ; n₂ = un nombre 1 à 12 ;
0,01 à 15 parties en poids, sur base de 100 parties en poids des polyamides des formules Ia/IB, Iia/IIB, de composés anhydride d'acide phosphonique cyclique selon la formule (IV), qui peut être mis en oeuvre sous une forme pure ou sous forme d'une solution aqueuse :
[(R)PO(O)-]ₙ (IV)
où
n = 3, 4, 5, 6, est des unités P-O alternées dans l'hétérocycle avec 3, 4, 5, 6 unités (P-O) dans le cycle,
R = CH₃, C₂H₅, C₃H₇, C₄H₉, isobutyle, 2,2,6,6-tétraméthyle-4-pipéridyle.

26. Matériau composite selon la revendication 25, contenant 10 à 90% en poids d'un polyamide (I) et 90 à 10% en poids d'un polyamide (II) partiellement cristallin.
